# EUROPEAN PATENT APPLICATION

(11) **EP 4 570 635 A1**
(43) Date of publication of application: **18.06.2025**
(21) Application number: 24191142.9
(22) Date of filing: 26.07.2024
(51) Int. Cl.: B62J 17/02, B62J 17/10, B62J 41/00, B62J 45/41, B62M 7/02

(54) **STRADDLED VEHICLE**

(30) Priority: 11.12.2023 JP 2023208474
(71) Applicant: Yamaha Hatsudoki Kabushiki Kaisha, Iwata-shi, Shizuoka 438-8501 (JP)
(72) Inventor: INOUE, Hiroyuki, IWATA, SHIZUOKA, 438-8501 (JP)
(74) Representative: Studio Torta S.p.A.

(57) **Abstract**

There is disclosed a straddled vehicle (1) that allows suitable reduction in air resistance of the straddled vehicle (1) and allows an enhanced cooling efficiency of a heat exchanger -(21); straddled vehicle (1)including a power unit (7), a heat exchanger (21), a cowl (31), an opening and closing member (51), a temperature detector (81), and a controller (90;. heat exchanger (21) being located more forward than the power unit (7); cowl (31) overlapping the heat exchanger (21) in side view of the straddled vehicle (1); the cowl (31) has an inlet (32) and an outlet (33);. the inlet (32) being located more forward than the heat exchanger (21); the outlet (33) being located more rearward than the heat exchanger (21); the opening and closing member (51) is capable of opening and closing the outlet (33); the temperature detector (81) detecting a temperature of a liquid flowing within the heat exchanger (21);. the controller (90) controlling the opening and closing member (51) in accordance with a detection result of the temperature detector (81).

## Description

### Technical Field

The present invention relates to a straddled vehicle provided with a cowl.

### Prior Art

Patent Literature 1 discloses a straddled vehicle. The straddled vehicle includes a cowl and a radiator. The radiator is located inside the cowl. The cowl has an inlet and a window. The inlet is for introducing air into the cowl. The window is an opening for releasing air inside the cowl to the outside of the cowl. The window is located more rearward than the inlet. The window is located more forward than the radiator.

The straddled vehicle further includes a rotary plate. The rotary plate opens and closes the window. The rotary plate is located more forward than the radiator. When the rotary plate opens the window, air enters the cowl through the inlet, and flows out of the cowl through the window. This reduces air resistance against the straddled vehicle. When the rotary plate closes the window, air enters the cowl through the inlet, and passes through the radiator. Accordingly, the radiator cools cooling water suitably.

### [Patent Literature 1]

Japanese Unexamined Patent Publication No. 2011-201411

In the Patent Literature 1, the window is located more rearward than the inlet and more forward than the radiator. Accordingly, when the window is opened, only part of air entering the cowl through the inlet is released through the window, and residual air entering the cowl through the inlet passes through the radiator. As a result, it is difficult to reduce a volume of air passing through the radiator sufficiently when the window is opened. Consequently, it is difficult to reduce air resistance of the straddled vehicle suitably when the window is opened.

A cooling efficiency of the radiator is enhanced as the radiator is located closer to the inlet. However, in the Patent Literature 1, the window is located more rearward than the inlet and more forward than the radiator. As a result, it is difficult to locate the radiator near the inlet. Consequently, it is difficult to further improve the cooling efficiency of the radiator.

### Description of the invention

The present invention has been made regarding the state of the art noted above, and its one object is to provide a straddled vehicle that allows suitable reduction in air resistance of the straddled vehicle and allows an enhanced cooling efficiency of a heat exchanger.

### Solution to Problem

The present invention is constituted as stated below to achieve the above object. A straddled vehicle includes
a power unit,
a heat exchanger located more forward than the power unit,
a cowl configured to overlap the heat exchanger in side view of the straddled vehicle, and having an inlet located more forward than the heat exchanger and an outlet located more rearward than the heat exchanger,
an opening and closing member capable of opening and closing the outlet,
a temperature detector configured to detect a temperature of a liquid flowing within the heat exchanger, and
a controller configured to control the opening and closing member in accordance with a detection result of the temperature detector.

[Effect] The straddled vehicle includes, the power unit, the heat exchanger, the cowl, the opening and closing member, the temperature detector, and the controller. The heat exchanger is located more forward than the power unit. The cowl overlaps the heat exchanger in side view of the straddled vehicle. The cowl has the inlet and the outlet. The inlet is located more forward than the heat exchanger. The outlet is located more rearward than the heat exchanger. The opening and closing member is capable of opening and closing the outlet. The temperature detector detects a temperature of the liquid flowing within the heat exchanger. The controller controls the opening and closing member in accordance with the detection result of the temperature detector. Accordingly, the controller easily controls the opening and closing member suitably.

The opening and closing member adjusts a volume of air passing the heat exchanger.

For example, when the opening and closing member opens the outlet, air within the cowl is released through the outlet. Accordingly, when the opening and closing member opens the outlet, air easily enters the cowl through the inlet. When the opening and closing member opens the outlet, air easily flows within the cowl. When the opening and closing member opens the outlet, air easily passes the heat exchanger. Consequently, when the opening and closing member opens the outlet, a large volume of air passes the heat exchanger. Consequently, when the opening and closing member opens the outlet, the heat exchanger cools a liquid suitably.

For example, when the opening and closing member closes the outlet, air within the cowl is not released through the outlet. Accordingly, when the opening and closing member closes the outlet, air hardly enters the cowl through the inlet. When the opening and closing member closes the outlet, air hardly flows within the cowl. When the opening and closing member closes the outlet, air hardly passes the heat exchanger. Consequently, when the opening and closing member closes the outlet, it is easy to satisfactorily reduce a volume of air passing the heat exchanger. Consequently, when the opening and closing member closes the outlet, it is easy to reduce air resistance suitably in the straddled vehicle.

As described above, the outlet is located more rearward than the heat exchanger. As a result, it is easy to locate the heat exchanger near the inlet. Accordingly, an enhanced cooling efficiency of the heat exchanger is obtainable.

In summary, the straddled vehicle allows suitable reduction in air resistance of the straddled vehicle. Moreover, the straddled vehicle allows an enhanced cooling efficiency of the heat exchanger.

It is preferred in the straddled vehicle described above that
the opening and closing member is located more rearward than the heat exchanger.

[Effect] As a result, it is much easier to locate the heat exchanger near the inlet. Accordingly, an enhanced cooling efficiency of the heat exchanger is obtainable more easily.

It is preferred in the straddled vehicle described above that
the cowl includes a left cover located leftward of the heat exchanger and extending in a front-back direction of the straddled vehicle, and a right cover located rightward of the heat exchanger and extending in the front-back direction of the straddled vehicle, that the inlet is located rightward of the left cover and leftward of the right cover, that the outlet includes a first left outlet passing through the left cover and a first right outlet passing through the right cover, and that the opening and closing member includes a first left opening and closing member configured to open and close the first left outlet and a first right opening and closing member configured to open and close the first right outlet.

[Effect] The inlet is located rightward of the left cover and leftward of the right cover. Consequently, it is easy to provide the inlet in the cowl. The outlet has the first left outlet and the first right outlet. The first left outlet passes through the left cover. The first right outlet passes through the right cover. Consequently, it is easy to provide the outlet in the cowl. The opening and closing member includes the first left opening and closing member and the first right opening and closing member. The first left opening and closing member opens and closes the first left outlet. The first right opening and closing member opens and closes the first right outlet. Consequently, it is easy that the opening and closing member opens and closes the outlet.

It is preferred in the straddled vehicle described above that
the left cover has a first left recess concave rightward, the first left outlet being located in the first left recess, and that the right cover has a first right recess concave leftward, the first right outlet being located in the first right recess.

[Effect] The left cover has the first left recess concave rightward. The first left outlet is located in the first left recess. Accordingly, the first left outlet is located at an appropriate position. The right cover has the first right recess concave leftward. The first right outlet is located in the first right recess. Accordingly, the first right outlet is located at an appropriate position.

It is preferred in the straddled vehicle described above that
the first left outlet is located at a front part of the first left recess and extends in a transverse direction of the straddled vehicle, the first left recess having a first left guide wall extending rearward and leftward from a right end of the first left outlet, and that the first right outlet is located at a front part of the first right recess and extends in the transverse direction of the straddled vehicle, the first right recess having a first right guide wall extending rearward and rightward from a left end of the first right outlet.

[Effect] The first left outlet is located at the front part of the first left recess. The first left outlet extends in the transverse direction of the straddled vehicle. Accordingly, when the first left opening and closing member opens the first left outlet, air within the cowl is efficiently released through the first left outlet to the outside of the cowl. The first left recess has the first left guide wall. The first left guide wall extends rearward and leftward from the right end of the first left outlet. Accordingly, the first left guide wall guides air rearward and leftward from the first left outlet. The first right outlet is located at the front part of the first right recess. The first right outlet extends in the transverse direction of the straddled vehicle. Accordingly, when the first right opening and closing member opens the first right outlet, air within the cowl is efficiently released through the first right outlet to the outside of the cowl. The first right recess has the first right guide wall. The first right guide wall extends rearward and rightward from the left end of the first right outlet. Accordingly, the first right guide wall guides air rearward and rightward from the first right outlet.

It is preferred in the straddled vehicle described above that

the right end of the first left outlet is positioned more rightward than a left end of the heat exchanger and the left end of the first right outlet is positioned more leftward than a right end of the heat exchanger.

[Effect] The right end of the first left outlet is positioned more rightward than the left end of the heat exchanger. Accordingly, when the first left opening and closing member opens the first left outlet, air having passed the heat exchanger is efficiently released through the first left outlet to the outside of the cowl. The left end of the first right outlet is positioned more leftward than the right end of the heat exchanger. Accordingly, when the first right opening and closing member opens the first right outlet, air having passed the heat exchanger is efficiently released through the first right outlet to the outside of the cowl.

It is preferred in the straddled vehicle described above that
the cowl includes a lower cover located lower than the heat exchanger, the lower cover connecting the right cover and the left cover.

[Effect] The lower cover prevents release of air within the cowl to the below of the cowl. Accordingly, a small volume of air is released from the cowl through a region except for the outlet to the outside of the cowl. Consequently, the opening and closing member effectively adjusts a volume of air passing through the heat exchanger. For example, when the opening and closing member opens the outlet, a volume of air passing through the heat exchanger increases effectively. For example, when the opening and closing member closes the outlet, a volume of air passing through the heat exchanger decreases effectively.

It is preferred in the straddled vehicle described above that
the opening and closing member is located more forward than the power unit.

[Effect] The opening and closing member does not interfere with the power unit.

It is preferred in the straddled vehicle described above that
the cowl overlaps the power unit in side view of the straddled vehicle.

[Effect] As described above, the power unit is located more rearward than the heat exchanger. The power unit prevents release of air within the cowl toward rearward of the cowl. Accordingly, a much smaller volume of air is released from the cowl through a region except for the outlet to the outside of the cowl. Consequently, the opening and closing member can adjust a volume of air passing through the heat exchanger more effectively.

It is preferred in the straddled vehicle described above that
the cowl extends from a position higher than the heat exchanger to a position lower than the power unit.

[Effect] Accordingly, the cowl is made large. Consequently, when the opening and closing member opens the outlet, a large volume of air passes through the heat exchanger.

It is preferred in the straddled vehicle described above that
the heat exchanger contains at least either a radiator or an oil cooler.

[Effect] If the heat exchanger contains the radiator, the opening and closing member adjusts a volume of air passing through the radiator. If the heat exchanger contains the oil cooler, the opening and closing member adjusts a volume of air passing through the oil cooler.

It is preferred that the straddled vehicle described above further includes
a catalytic device configured to overlap the cowl in side view of the straddled vehicle.

[Effect] The catalytic device overlaps the cowl in side view of the straddled vehicle. Consequently, it is easy that the opening and closing member adjusts an air flow around the catalytic device. For example, an air flow around the catalytic device when the opening and closing member opens the outlet is larger than an air flow around the catalytic device when the opening and closing member closes the outlet.

It is preferred in the straddled vehicle described above that
the controller switches the opening and closing member from a closed state to an opened state if a temperature of the liquid rises from a value lower than a first threshold to a value higher than the first threshold, and that the controller switches the opening and closing member from the opened state to the closed state if a temperature of the liquid lowers from a value higher than a second threshold to a value lower than the second threshold, the second threshold being lower than the first threshold.

[Effect] If the temperature of the liquid rises from a value lower than the first threshold to a value higher than the first threshold, the opening and closing member is switched from the closed state to the opened state. Here, when the opening and closing member is under the opened state, the opening and closing member opens the outlet. When the opening and closing member is under the closed state, the opening and closing member closes the outlet. Consequently, the heat exchanger cools the liquid suitably. If the temperature of the liquid lowers from a value higher than the second threshold to a value lower than the second threshold, the opening and closing member is changed from the opened state to the closed state. This suitably reduces air resistance of the straddled vehicle. As described above, the controller controls the opening and closing member suitably.

It is preferred that the straddled vehicle described above includes at least one selected from an outside air temperature detector configured to detect an outside air temperature, a throttle opening degree detector configured to detect an opening degree of a throttle, and a vehicle speed detector configured to detect a speed of the straddled vehicle, and that the controller adjusts an opening degree of the opening and closing member in accordance with at least one selected from a detection result of the outside air temperature by the outside air temperature detector, a detection result of the opening degree of the throttle by the throttle opening degree detector, and a detection result of the speed of the straddled vehicle by the vehicle speed detector.

[Effect] The controller adjusts the opening degree of the opening and closing member. Here, the opening degree of the opening and closing member is one factor for the volume of air passing through the heat exchanger. Accordingly, the controller adjusts the volume of air passing through the heat exchanger when the opening and closing member opens the outlet.

The controller adjusts the opening degree of the opening and closing member in accordance with at least one selected from the detection result of the outside air temperature, the detection result of the opening degree of the throttle, and the detection result of the speed of the straddled vehicle. Here, the detection result of the outside air temperature is one factor for the temperature of air passing through the heat exchanger. The detection result of the opening degree of the throttle is one factor for the temperature of the liquid in the heat exchanger. Here, the speed of the straddled vehicle is one factor for the volume of air passing through the heat exchanger. Consequently, the controller adjusts the volume of air passing through the heat exchanger suitably.

The straddled vehicle includes at least one selected from the outside air temperature detector, the throttle opening degree detector, and the vehicle speed detector. Accordingly, it is easy that the controller adjusts the opening degree of the opening and closing member in accordance with at least one selected from the detection result of the outside air temperature, the detection result of the opening degree of the throttle, and the detection result of the speed of the straddled vehicle.

It is preferred that the straddled vehicle described above includes a plurality of heat exchangers having the outlets individually, and that the opening and closing members are provided at the outlets individually.

[Effect] The outlets are provided at the heat exchangers individually. The opening and closing members are provided at the outlets individually. Consequently, it is easy to adjust the volumes of air passing through the heat exchangers individually.

It is preferred in the straddled vehicle described above that when the opening and closing member opens the outlet, the controller increases the opening degree of the opening and closing member as the outside air temperature is high.

In other words, it is preferred in the straddled vehicle described above that when the opening and closing member opens the outlet, the controller decreases the opening degree of the opening and closing member as the outside air temperature is low.

[Effect] The controller increases the opening degree of the opening and closing member as the outside air temperature is high when the opening and closing member opens the outlet. The controller decreases the opening degree of the opening and closing member as the outside air temperature is low when the opening and closing member opens the outlet. For example, if the outside air temperature is relatively high, the temperature of air passing through the heat exchanger is high and the volume of air passing through the heat exchanger is large. Consequently, if the outside air temperature is relatively high, the heat exchanger cools the liquid suitably. For example, if the outside air temperature is relatively low, the temperature of air passing through the heat exchanger is low and the volume of air passing through the heat exchanger is small. Consequently, if the outside air temperature is relatively low, the heat exchanger cools the liquid suitably. As a result, the heat exchanger cools the liquid suitably regardless of the outside air temperature. As described above, the controller adjusts the opening degree of the opening and closing member suitably.

It is preferred in the straddled vehicle described above that
the controller increases the opening degree of the opening and closing member as the opening degree of the throttle is large when the opening and closing member opens the outlet.

In other words, it is preferred in the straddled vehicle described above that
the controller decreases the opening degree of the opening and closing member as the opening degree of the throttle is small when the opening and closing member opens the outlet.

[Effect] The controller increases the opening degree of the opening and closing member as the opening degree of the throttle is large when the opening and closing member opens the outlet. The controller decreases the opening degree of the opening and closing member as the opening degree of the throttle is small when the opening and closing member opens the outlet. For example, if the opening degree of the throttle is relatively large, the temperature of the liquid in the heat exchanger is high and the volume of air passing through the heat exchanger is large. Consequently, if the opening degree of the throttle is relatively large, the heat exchanger cools the liquid suitably. For example, if the opening degree of the throttle is relatively small, the temperature of the liquid in the heat exchanger is low and the volume of air passing through the heat exchanger is small. Consequently, if the opening degree of the throttle is relatively small, the heat exchanger cools the liquid suitably. As a result, the heat exchanger cools the liquid suitably regardless of the opening degree of the throttle. As described above, the controller adjusts the opening degree of the opening and closing member suitably.

Alternatively, it is preferred in the straddled vehicle described above that
the controller decreases the opening degree of the opening and closing member as the opening degree of the throttle is large when the opening and closing member opens the outlet.

[Effect] The controller decreases the opening degree of the opening and closing member as the opening degree of the throttle is large when the opening and closing member opens the outlet. For example, if the opening degree of the throttle is relatively large, the temperature of the liquid in the heat exchanger is high and the volume of air passing the heat exchanger is small. Consequently, if the opening degree of the throttle is relatively large, reduction in air resistance of the straddled vehicle is given priority over cooling of the liquid by the heat exchanger. In other words, if the opening degree of the throttle is relatively large, acceleration of the straddled vehicle is given priority over cooling of the liquid by the heat exchanger. As described above, the controller adjusts the opening degree of the opening and closing member suitably.

It is preferred in the straddled vehicle described above that
the controller decreases the opening degree of the opening and closing member as the speed of the straddled vehicle is high when the opening and closing member opens the outlet.

In other words, it is preferred in the straddled vehicle described above that the controller increases the opening degree of the opening and closing member as the speed of the straddled vehicle is low when the opening and closing member opens the outlet.

[Effect] The controller decreases the opening degree of the opening and closing member as the speed of the straddled vehicle is high when the opening and closing member opens the outlet. The controller increases the opening degree of the opening and closing member as the speed of the straddled vehicle is low when the opening and closing member opens the outlet. For example, if the speed of the straddled vehicle is relatively high, the volume of air passing through the heat exchanger is not excessively large. Consequently, if the speed of the straddled vehicle is relatively high, the heat exchanger cools the liquid suitably. For example, if the speed of the straddled vehicle is relatively low, the volume of air passing through the heat exchanger is not excessively small. Consequently, if the speed of the straddled vehicle is relatively low, the heat exchanger cools the liquid suitably. As a result, the heat exchanger cools the liquid suitably regardless of the speed of the straddled vehicle. As described above, the controller adjusts the opening degree of the opening and closing member suitably.

The straddled vehicle according to the present invention achieves suitable reduction in air resistance of the straddled vehicle and an enhanced cooling efficiency of the heat exchanger.

### Brief Description of Drawings

Fig. 1 is a left side view of a straddled vehicle according to an embodiment.
Fig. 2 is a front view of the straddled vehicle.
Fig. 3 is a sectional view taken on line III-III of Fig. 1.
Fig. 4 is a sectional view taken on line III-III of Fig. 1.
Fig. 5 is a perspective rear view of a principal part.
Fig. 6 is a perspective rear view of the principal part.
Fig. 7 is a control block diagram of the straddled vehicle.
Fig. 8 is a left side view of a straddled vehicle according to one modification.

### Embodiments of the invention

A straddled vehicle according to the present invention will be described hereinafter with reference to the drawings.

### 1. Outline Construction of Straddled Vehicle 1

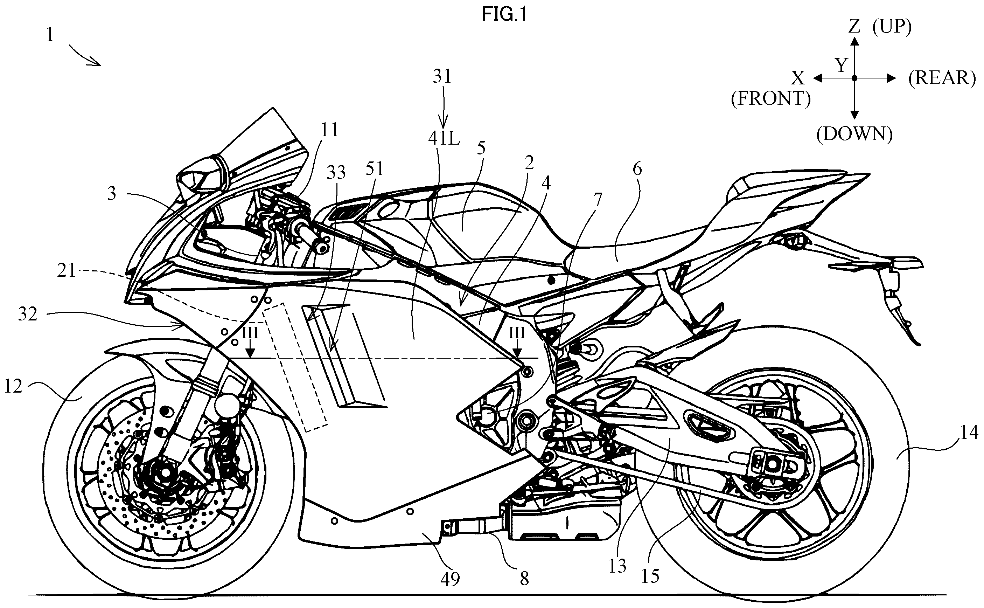

Fig. 1 is a left side view of a straddled vehicle 1 according to an embodiment. Description is made of an outline construction of the straddled vehicle 1.

Fig. 1 shows a front-back direction X, a transverse direction Y, and an up-down direction Z of the straddled vehicle 1. The front-back direction X, transverse direction Y, and up-down direction Z are defined with reference to a driver (also called a rider) riding on the straddled vehicle 1. The front-back direction X, transverse direction Y, and up-down direction Z are perpendicular to one another. The front-back direction X and transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver riding on the straddled vehicle 1. Unless otherwise stated in this specification, "forward" and "rearward" include not only directions parallel to the front-back direction X but also directions close to the front-back direction X. The directions close to the front-back direction X are, for example, directions at angles not exceeding 45 degrees to the front-back direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. For reference, the drawings show the terms FRONT, REAR, UP, DOWN, RIGHT, and LEFT, as appropriate.

In the present specification, the language "in side view of the straddled vehicle 1" is referred to as "in side view of the vehicle", as appropriate. The language "in plan view of the straddled vehicle 1" is referred to as "in plan view of the vehicle", as appropriate. The language "in front view of the straddled vehicle 1" is referred to as "in front view of the vehicle", as appropriate.

The straddled vehicle 1 includes a vehicle body frame 2, a fuel tank 5, and a seat 6. The vehicle body frame 2 includes a head tube 3 and a main frame 4. The head tube 3 is located at a front part of the straddled vehicle 1. The main frame 4 extends rearward and downward from the head tube 3. The fuel tank 5 and the seat 6 are supported by the vehicle body frame 2. The fuel tank 5 is located above the main frame 4. The seat 6 is located rearward of the fuel tank 5.

The straddled vehicle 1 includes a power unit 7. The power unit 7 is supported by the vehicle body frame 2. The power unit 7 is located below the main frame 4. The power unit 7 is located below the fuel tank 5. The power unit 7 generates a driving force for traveling the straddled vehicle 1. The power unit 7 is for example, an engine. The engine is a water-cooled engine that uses cooling water. The engine is cooled with the cooling water.

The straddled vehicle 1 includes a catalytic device 8. The catalytic device 8 purifies exhaust gas from the power unit 7. The catalytic device 8 is located below the power unit 7, for example. The catalytic device 8 is provided on an exhaust pipe connected to the power unit 7, for example. The exhaust gas from the power unit 7 passes the catalytic device 8.

The straddled vehicle 1 includes a steering device 11 and a front wheel 12. The steering device 11 is supported by the vehicle body frame 2. The steering device 11 is supported by the head tube 3. The steering device 11 is swingable relative to the vehicle body frame 2. The steering device 11 extends downward. The front wheel 12 is rotatably supported by a lower end of the steering device 11.

The straddled vehicle 1 includes a swing arm 13 and a rear wheel 14. The swing arm 13 is supported by a rear part of the main frame 4 in a swingable manner. The swing arm 13 extends rearward from the main frame 4. The rear wheel 14 is rotatably supported by a rear end of the swing arm 13.

The straddled vehicle 1 includes a transmission mechanism 15. The transmission mechanism 15 is, for example, a chain. The transmission mechanism 15 transmits a driving force from the power unit 7 to the rear wheel 14. The driving force causes the rear wheel 14 to rotate to drive the straddled vehicle 1 forward.

The straddled vehicle 1 includes a heat exchanger 21. The heat exchanger 21 is supported by the vehicle body frame 2, for example. The heat exchanger 21 is located lower than the head tube 3. The heat exchanger 21 is located more forward than the power unit 7. The heat exchanger 21 is located more forward than the catalytic device 8. The heat exchanger 21 is located more rearward than the front wheel 12. A liquid flows within the heat exchanger 21. The heat exchanger 21 cools the liquid.

The number of the heat exchanger 21 is one, for example. The heat exchanger 21 includes a radiator, for example. The liquid is, for example, cooling water. The cooling water circulates between the heat exchanger 21 and the power unit 7. The heat exchanger 21 is connected to the power unit 7 via a pipe (not shown) for cooling water.

The straddled vehicle 1 includes a cowl 31. The cowl 31 covers the front part of the straddled vehicle 1. The cowl 31 extends rearward from the front of the head tube 3. The cowl 31 is also called a front cowl or a front cover.

The cowl 31 overlaps the power unit 7 in side view of the vehicle. For example, the cowl 31 partially overlaps the power unit 7 in side view of the vehicle. The cowl 31 extends from a position higher than the heat exchanger 21 to a position lower than the power unit 7.

The cowl 31 overlaps the catalytic device 8 in side view of the vehicle. For example, the cowl 31 partially overlaps the catalytic device 8 in side view of the vehicle. The cowl 31 extends from a position higher than the heat exchanger 21 to a position lower than the catalytic device 8.

The cowl 31 overlaps the heat exchanger 21 in side view of the vehicle. The cowl 31 entirely overlaps the heat exchanger 21 in side view of the vehicle.

The cowl 31 has an inlet 32. The inlet 32 is located at a front part of the cowl 31. The inlet 32 is located more forward than the heat exchanger 21. The heat exchanger 21 is located more rearward than the inlet 32. The inlet 32 is for introducing air into the cowl 31. Air enters the cowl 31 from outside of the cowl 31 through the inlet 32.

The cowl 31 has an outlet 33. The outlet 33 is located more rearward than the inlet 32. The outlet 33 is located more rearward than the heat exchanger 21. The outlet 33 is for releasing air within the cowl 31. Air within the cowl 31 is released to the outside of the cowl 31 through the outlet 33.

The straddled vehicle 1 includes an opening and closing member 51. The opening and closing member 51 is capable of opening and closing the outlet 33. The opening and closing member 51 switches between an opened state and a closed state. When the opening and closing member 51 is under the opened state, the opening and closing member 51 opens the outlet 33. When the opening and closing member 51 is under the closed state, the opening and closing member 51 closes the outlet 33.

The opening and closing member 51 is provided at the outlet 33. The opening and closing member 51 is movable relative to the cowl 31. The opening and closing member 51 is rotatable relative to the cowl 31, for example. When the opening and closing member 51 moves relative to the cowl 31, the opening and closing member 51 switches between the opened state and the closed state. When the opening and closing member 51 moves relative to the cowl 31, the opening and closing member 51 opens or closes the outlet 33.

The opening and closing member 51 is located more rearward than the heat exchanger 21. The entire of the opening and closing member 51 is located more rearward than the entire of the heat exchanger 21. The opening and closing member 51 has no portion positioned more forward than the heat exchanger 21. Accordingly, the opening and closing member 51 does not overlap the heat exchanger 21 in side view of the vehicle.

The opening and closing member 51 is located more forward than the power unit 7. The entire of the opening and closing member 51 is located more forward than the entire of the power unit 7. Accordingly, the opening and closing member 51 does not overlap the power unit 7 in side view of the vehicle.

The opening and closing member 51 is located more forward than the catalytic device 8. The entire of the opening and closing member 51 is located more forward than the entire of the catalytic device 8. Accordingly, the opening and closing member 51 does not overlap the catalytic device 8 in side view of the vehicle.

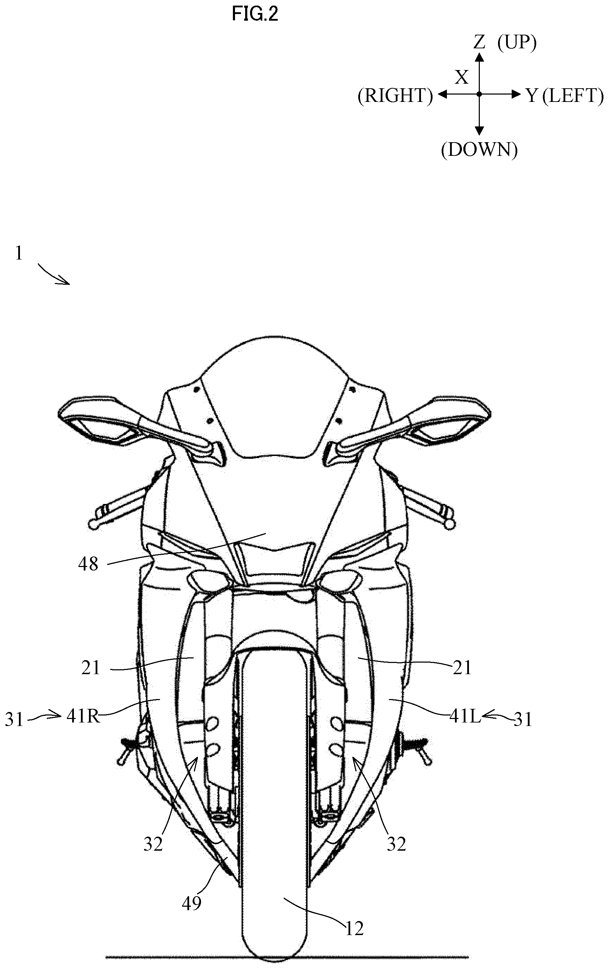

Fig. 2 is a front view of the straddled vehicle 1. The cowl 31 includes a left cover 41L and a right cover 41R. The left cover 41L is located leftward of the front wheel 12. The left cover 41L is located leftward of the heat exchanger 21. The left cover 41L extends in the up-down direction Z in front view of the vehicle. The right cover 41R is located rightward of the left cover 41L. The right cover 41R is located rightward of the front wheel 12. The right cover 41R is located rightward of the heat exchanger 21. The right cover 41R extends in the up-down direction Z in front view of the vehicle.

The inlet 32 is located between the left cover 41L and the right cover 41R. The inlet 32 is located rightward of the left cover 41L. The inlet 32 is located leftward of the right cover 41R.

The cowl 31 includes a front cover 48 and a lower cover 49. The front cover 48 is located forward of the head tube 3. The front cover 48 is located above the front wheel 12. The front cover 48 is located higher than the heat exchanger 21. The front cover 48 is located above the left cover 41L and the right cover 41R. The front cover 48 is connected to an upper end of the left cover 41L. The front cover 48 is connected to an upper end of the right cover 41R. The front cover 48 connects the left cover 41L and the right cover 41R. The front cover 48 extends from the upper end of the left cover 41L to the upper end of the right cover 41R. The lower cover 49 is located lower than the front cover 48. The lower cover 49 is located lower than the heat exchanger 21. The lower cover 49 is connected to a lower end of the left cover 41L. The lower cover 49 is connected to a lower end of the right cover 41R. The lower cover 49 connects the left cover 41L and the right cover 41R. The lower cover 49 extends from the lower end of the left cover 41L to the lower end of the right cover 41R.

The inlet 32 is located between the front cover 48 and the lower cover 49. The inlet 32 is located below the front cover 48. The inlet 32 is located above the lower cover 49.

Reference is made to Fig. 1. The left cover 41L overlaps the heat exchanger 21 in side view of the vehicle. The left cover 41L overlaps the power unit 7 in side view of the vehicle. The right cover 41R overlaps the heat exchanger 21 in side view of the vehicle, which illustration is omitted. The right cover 41R overlaps the power unit 7 in side view of the vehicle.

The lower cover 49 is located lower than the power unit 7. The lower cover 49 overlaps the catalytic device 8 in side view of the vehicle.

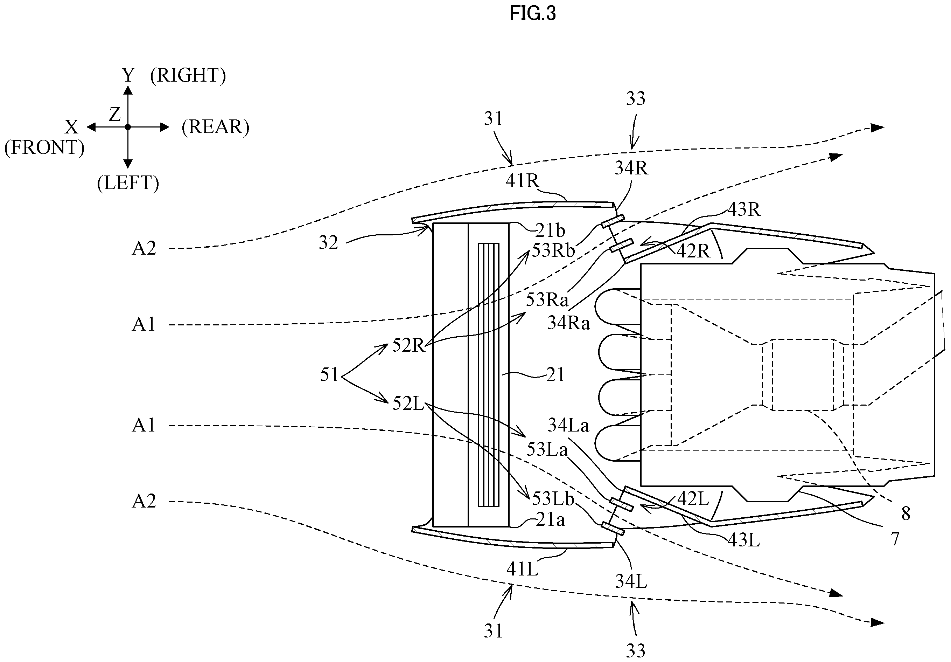

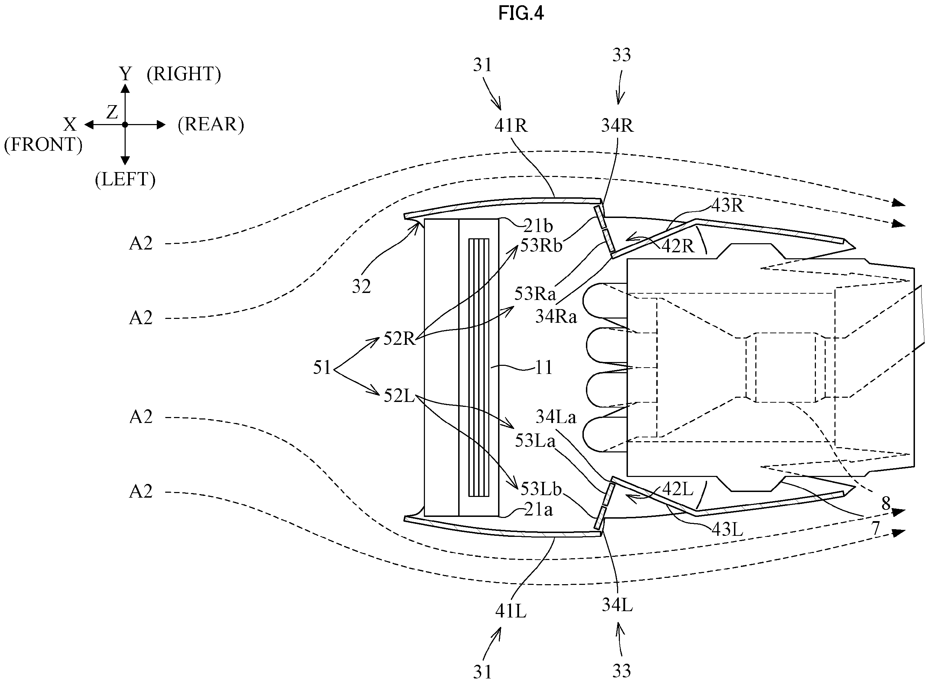

Figs. 3 and 4 are each a sectional view taken on line III-III of Fig. 1. In Fig. 3, the opening and closing member 51 is under an opened state. In Fig. 4, the opening and closing member 51 is under a closed state. The left cover 41L extends in the front-back direction X. The right cover 41R extends in the front-back direction X. The inlet 32 is located between a front edge of the left cover 41L and a front edge of the right cover 41R. The inlet 32 is located rightward of the front edge of the left cover 41L and leftward of the front edge of the right cover 41R.

More specifically, the inlet 32 is defined by the front edge of the left cover 41L, the front edge of the right cover 41R, a lower edge of the front cover 48, and a front edge of the lower cover 49.

The left cover 41L extends from a position more forward than the heat exchanger 21 to a position more rearward than the heat exchanger 21. The right cover 41R extends from a position more forward than the heat exchanger 21 to a position more rearward than the heat exchanger 21. The heat exchanger 21 is located between the left cover 41L and the right cover 41R. The heat exchanger 21 extends in the transverse direction Y.

The left cover 41L extends to a position leftward of the power unit 7. The right cover 41R extends to a position rightward of the power unit 7. The power unit 7 is located between the left cover 41L and the right cover 41R.

The left cover 41L extends to a position leftward of the catalytic device 8. The right cover 41R extends to a position rightward of the catalytic device 8. The catalytic device 8 is located between the left cover 41L and the right cover 41R.

The outlet 33 is located more rearward than the inlet 32. The outlet 33 is located more rearward than the heat exchanger 21. The outlet 33 is located more forward than the power unit 7. The outlet 33 is located more forward than the catalytic device 8.

The outlet 33 includes a first left outlet 34L. The first left outlet 34L is provided on the left cover 41L. The first left outlet 34L passes through the left cover 41L. The first left outlet 34L is located more rearward than the heat exchanger 21. The entire of the first left outlet 34L is located more rearward than the entire of the heat exchanger 21. The first left outlet 34L has no portion positioned more forward than the heat exchanger 21. Accordingly, the first left outlet 34L does not overlap the heat exchanger 21 in side view of the vehicle.

The left cover 41L has a first left recess 42L. The first left recess 42L is concave rightward. The first left recess 42L is located more rearward than the heat exchanger 21.

The first left outlet 34L is located in the first left recess 42L. The first left outlet 34L is located at a front part of the first left recess 42L. The first left outlet 34L extends in the transverse direction Y. The first left outlet 34L has a right end 34La.

The first left recess 42L includes a first left guide wall 43L. The first left guide wall 43L extends rearward and leftward from the right end 34La of the first left outlet 34L. The first left guide wall 43L guides air rearward and leftward from the first left outlet 34L.

A position of the first left outlet 34L overlaps a position of the heat exchanger 21 in the transverse direction Y. Specifically, the heat exchanger 21 has a left end 21a and a right end 21b. The right end 34La of the first left outlet 34L is located more rightward than the left end 21a of the heat exchanger 21. The right end 34La of the first left outlet 34L is located more leftward than the right end 21b of the heat exchanger 21.

The outlet 33 includes a first right outlet 34R. The first right outlet 34R is provided on the right cover 41R. The first right outlet 34R passes through the right cover 41R. The first right outlet 34R is located more rearward than the heat exchanger 21. The entire of the first right outlet 34R is located more rearward than the entire of the heat exchanger 21. The first right outlet 34R has no portion positioned more forward than the heat exchanger 21. Accordingly, the first right outlet 34R does not overlap the heat exchanger 21 in side view of the vehicle.

The right cover 41R has a first right recess 42R. The first right recess 42R is concave leftward. The first right recess 42R is located more rearward than the heat exchanger 21.

The first right outlet 34R is located in the first right recess 42R. The first right outlet 34R is located at a front part of the first right recess 42R. The first right outlet 34R extends in the transverse direction Y. The first right outlet 34R has a left end 34Ra.

The first right recess 42R includes a first right guide wall 43R. The first right guide wall 43R extends rearward and rightward from the left end 34Ra of the first right outlet 34R. The first right guide wall 43R guides air rearward and rightward from the first right outlet 34R.

A position of the first right outlet 34R overlaps a position of the heat exchanger 21 in the transverse direction Y. Specifically, the left end 34Ra of the first right outlet 34R is located more leftward than the right end 21b of the heat exchanger 21. The left end 34Ra of the first right outlet 34R is located more rightward than the left end 21a of the heat exchanger 21.

The opening and closing member 51 includes a first left opening and closing member 52L. The first left opening and closing member 52L is capable of opening and closing the first left outlet 34L. The first left opening and closing member 52L is provided on the first left outlet 34L. The first left opening and closing member 52L is supported by the left cover 41L. The first left opening and closing member 52L is movable relative to the left cover 41L.

The first left opening and closing member 52L is located more rearward than the heat exchanger 21. The entire of the first left opening and closing member 52L is located more rearward than the entire of the heat exchanger 21. The first left opening and closing member 52L has no portion positioned more forward than the heat exchanger 21. Accordingly, the first left opening and closing member 52L does not overlap the heat exchanger 21 in side view of the vehicle.

The first left opening and closing member 52L is located more forward than the power unit 7. Accordingly, the first left opening and closing member 52L does not interfere with the power unit 7.

For example, the first left opening and closing member 52L includes two plates 53La, 53Lb. The plates 53La and 53Lb are each of a plate shape. The plate 53La and the plate 53Lb are lined in the transverse direction Y. The plate 53La and the plate 53Lb are each rotatable relative to the left cover 41L.

The opening and closing member 51 includes a first right opening and closing member 52R. The first right opening and closing member 52R is capable of opening and closing the first right outlet 34R. The first right opening and closing member 52R is provided on the first right outlet 34R. The first right opening and closing member 52R is supported by the right cover 41R. The first right opening and closing member 52R is movable relative to the right cover 41R.

The first right opening and closing member 52R is located more rearward than the heat exchanger 21. The entire of the first right opening and closing member 52R is located more rearward than the entire of the heat exchanger 21. The first right opening and closing member 52R has no portion positioned more forward than the heat exchanger 21. Accordingly, the first right opening and closing member 52R does not overlap the heat exchanger 21 in side view of the vehicle.

The first right opening and closing member 52R is located more forward than the power unit 7. Accordingly, the first right opening and closing member 52R does not interfere with the power unit 7.

For example, the first right opening and closing member 52R includes two plates 53Ra, 53Rb. The plates 53Ra and 53Rb are each of a plate shape. The plate 53Ra and the plate 53Rb are lined in the transverse direction Y. The plate 53Ra and the plate 53Rb are each rotatable relative to the right cover 41R.

Reference is made to Fig. 3. Description is made of airflow when the opening and closing member 51 is under the opened state. When the opening and closing member 51 is under the opened state, airflow A1 and airflow A2 are generated, for example. The airflow A1 passes through the heat exchanger 21. The airflow A2 does not pass through the heat exchanger 21. Fig. 3 schematically shows the airflow A1, A2 by dotted lines.

The airflow A1 is to be described. The airflow A1 enters the cowl 31 from an area in front of the inlet 32 through the inlet 32. The airflow A1 runs rearward within the cowl 31. The airflow A1 is guided into the heat exchanger 21 by the cowl 31. The airflow A1 passes through the heat exchanger 21. The airflow A1 takes heat from the heat exchanger 21. The airflow A1 cools a liquid in the heat exchanger 21. The straddled vehicle 1 undergoes air resistance due to the airflow A1 passing through the heat exchanger 21. Then, the airflow A1 exits from the outlet 33 to the outside of the cowl 31. Specifically, after the airflow A1 passes through the heat exchanger 21, the airflow A1 exits to the outside of the cowl 31 through the first left outlet 34L and the first right outlet 34R. After the airflow A1 is released from the first left outlet 34L, the airflow A1 is guided to the first left guide wall 43L. The airflow A1 runs rearward and leftward along the first left guide wall 43L. The airflow A1 runs away leftward from the straddled vehicle 1. After the airflow A1 is released from the first right outlet 34R, the airflow A1 is guided to the first right guide wall 43R. The airflow A1 runs rearward and rightward along the first right guide wall 43R. The airflow A1 runs away rightward from the straddled vehicle 1.

The airflow A2 is to be described. The airflow A2 runs rearward outside of the cowl 31. The airflow A2 runs rearward in an area leftward of the left cover 41L. The airflow A2 runs rearward along the left cover 41L. The airflow A2 runs rearward in an area rightward of the right cover 41R. The airflow A2 runs rearward along the right cover 41R.

After the airflow A1 is released from the outlet 33 to the outside of the cowl 31, the airflow A1 impacts the airflow A2. The airflow A2 is disturbed by the airflow A1. The airflow A2 is disturbed at an area in the vicinity of the outlet 33. The straddled vehicle 1 undergoes more air resistance due to the disturbed airflow A2.

Reference is made to Fig. 4. Description is made of airflow when the opening and closing member 51 is under the closed state. When the opening and closing member 51 is under the closed state, airflow A1 is not substantially generated, for example. When the opening and closing member 51 is under the closed state, the airflow A2 is generated.

When the opening and closing member 51 is under the closed state, air within the cowl 31 does not run to the outside of the cowl 31 through the outlet 33. There is no space for the air within the cowl 31 to go. Air stagnates within the cowl 31. Air pressure within the cowl 31 may increase. Accordingly, air is hard to enter the cowl 31 from an area in front of the inlet 32 through the inlet 32. That is, the airflow A1 is hard to be generated. Air flows from the area in front of the inlet 32 to an area leftward of the left cover 41L or an arear rightward of the right cover 41R. That is, the airflow A2 is generated.

When the opening and closing member 51 is under the closed state, a volume of air passing through the heat exchanger 21 decreases. The volume of air passing through the heat exchanger 21 is significantly small. Accordingly, the straddled vehicle 1 undergoes less air resistance due to the air passing through the heat exchanger 21. The air resistance of the straddled vehicle 1 is small.

As described above, when the opening and closing member 51 is under the closed state, air within the cowl 31 does not run to the outside of the cowl 31 through the outlet 33. Accordingly, the airflow A2 is hard to be distributed. The airflow A2 runs smoothly at an area in the vicinity of the outlet 33. This results in much less air resistance of the straddled vehicle 1.

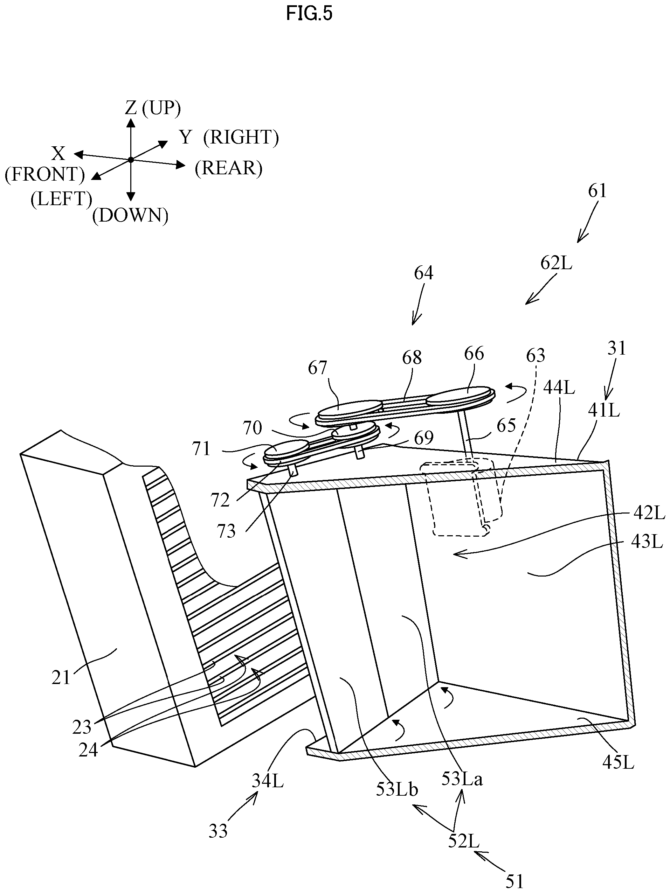

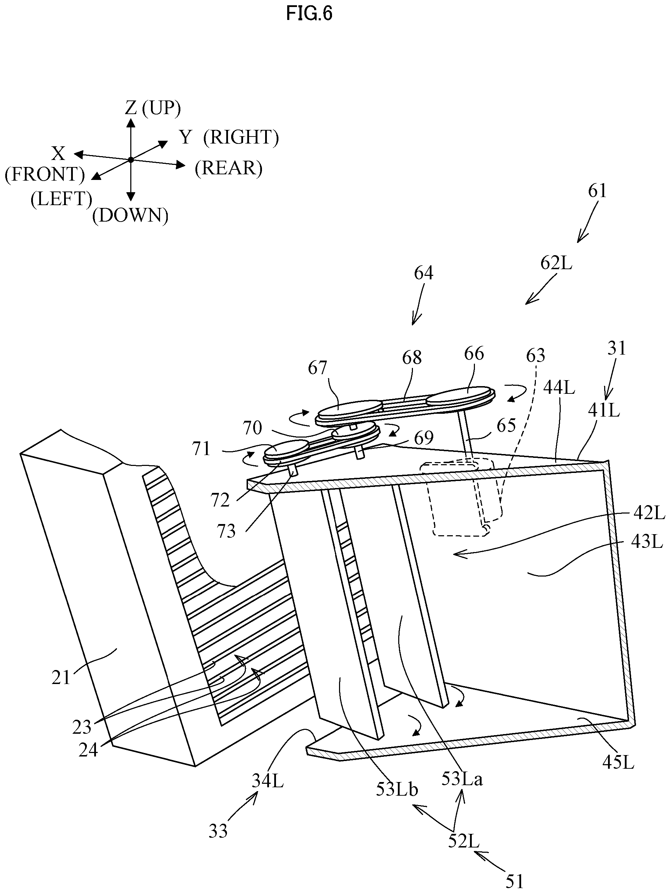

Figs. 5 and 6 are each is a perspective view of the heat exchanger 21, the outlet 33, and the opening and closing member 51. Specifically, the outlet 33 in Figs. 5 and 6 corresponds to the first left outlet 34L. The opening and closing member 51 in Figs. 5 and 6 corresponds to the first left opening and closing member 52L. Fig. 5 illustrates the first left opening and closing member 52L under the closed state, whereas Fig. 6 illustrates the first left opening and closing member 52L under the opened state.

The heat exchanger 21 includes plurality of ducts 23 where cooling water flows. The ducts 23 each extend in the transverse direction Y, for example. The heat exchanger 21 has a plurality of air flow paths 24 formed therein. The air flow paths 24 are individually arranged between adjacent to ducts 23. The airflow A1 described above passes through the ducts 24. When the airflow A1 passes through the ducts 24, the airflow A1 contacts the ducts 23.

The first left recess 42L further includes a first left upper wall 44L and a first left lower wall 45L. The first left upper wall 44L extends rearward from an upper end of the first left outlet 34L. The first left lower wall 45L extends rearward from a lower end of the first left outlet 34L.

The straddled vehicle 1 includes a driving unit 61. The driving unit 61 opens and closes the opening and closing member 51.

The driving unit 61 includes a first left driving unit 62L. The first left driving unit 62L opens and closes the first left opening and closing member 52L. The driving unit 61 includes a first right driving unit, which illustration is omitted. The first right driving unit opens and closes the first right opening and closing member 52R.

The following exemplarily describes a construction of the first left driving unit 62L. The first left driving unit 62L includes a motor 63 and a transmission mechanism 64. The motor 63 outputs rotational power. The transmission mechanism 64 transmits rotational power from the motor 63 to the first left opening and closing member 52L. The rotational power causes the first left opening and closing member 52L to rotate to open and close the first left outlet 34L.

The motor 63 is fixed to the left cover 41L. The motor 63 is located rightward of the first left guide wall 43L, for example. The motor 63 is classified as a stepping motor, for example. The stepping motor suitably adjusts an opening degree of the first left opening and closing member 52L. For example, the stepping motor can stop the first left opening and closing member 52L at a specified angle.

The transmission mechanism 64 includes a first shaft 65. a first pulley 66, a second pulley 67, a belt 68, a second shaft 69, a third pulley 70, a fourth pulley 71, a belt 72, and a third shaft 73. The first shaft 65 is coupled to the motor 63. The first pulley 66 is fixed to the first shaft 65. The belt 68 is wound around the first pulley 66 and the second pulley 67. The second shaft 69 is fixed to the second pulley 67. The third pulley 70 is fixed to the second shaft 69. The belt 72 is wound around the third pulley 70 and the fourth pulley 71. The third shaft 73 is fixed to the fourth pulley 71.

The third pulley 70 has a same diameter as a diameter of the fourth pulley 71. Accordingly, a rotation angle of the third pulley 70 is same as a rotation angle of the fourth pulley 71.

The second shaft 69 and the third shaft 73 each extend in the up-down direction, for example. The second shaft 69 and the third shaft 73 are lined in the transverse direction Y. The second shaft 69 and the third shaft 73 are each supported by the left cover 41L. For example, the second shaft 69 and the third shaft 73 are supported by the first left upper wall 44L and the first left lower wall 45L, respectively. The second shaft 69 and the third shaft 73 are each rotatable relative to the left cover 41L.

The plate 53La is fixed to the second shaft 69. The plate 53La is supported by the second shaft 69. The plate 53Lb is fixed to the third shaft 73. The plate 53Lb is supported by the third shaft 73.

The following exemplarily describes operation on the first left driving unit 62L. When the motor 63 outputs rotational power, the first shaft 65 and the first pulley 66 rotate integrally. The belt 68 transmits rotational power from the first pulley 66 to the second pulley 67. The second pulley 67, the second shaft 69, the third pulley 70, and the plate 53La rotate integrally. The belt 72 transmits rotational power from the third pulley 70 to the fourth pulley 71. The fourth pulley 71, the third shaft 73, and the plate 53Lb rotate integrally. A rotation angle of the plate 53La is same as a rotation angle of the plate 53Lb.

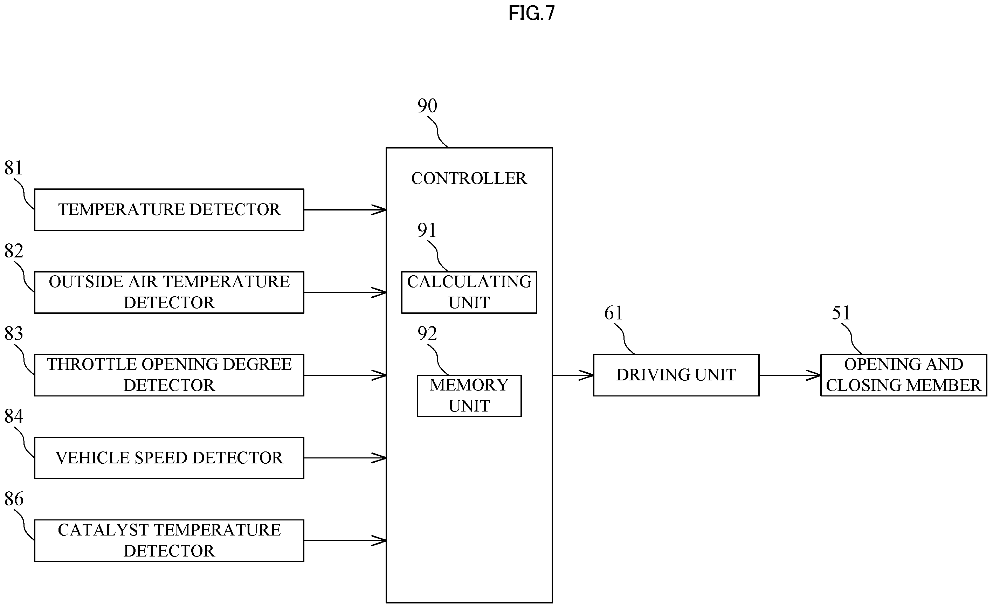

Fig.7 is a control block diagram of the straddled vehicle 1. The straddled vehicle 1 includes a temperature detector 81. The temperature detector 81 detects a temperature of a liquid flowing within the heat exchanger 21. The temperature detector 81 detects a temperature of cooling water in the radiator, for example.

The straddled vehicle 1 includes an outside air temperature detector 82. The outside air temperature detector 82 detects a temperature of outside air of the straddled vehicle 1.

The straddled vehicle 1 includes a throttle opening degree detector 83. The throttle opening degree detector 83 detects an opening degree of a throttle.

The straddled vehicle 1 includes a vehicle speed detector 84. The vehicle speed detector 84 detects a speed of the straddled vehicle 1.

The straddled vehicle 1 includes a catalyst temperature detector 86. The catalyst temperature detector 86 detects a temperature of the catalytic device 8. Here, the temperature of the catalytic device 8 may be a temperature of the catalytic device 8 itself. Alternatively, the temperature of the catalytic device 8 may be a temperature of exhaust gas in the catalytic device 8.

The straddled vehicle 1 includes a controller 90. The controller 90 is connected to the driving unit 61. The controller 90 controls the opening and closing member 51. The controller 90 controls the opening and closing member 51 via the driving unit 61. The controller 90 causes the opening and closing member 51 to open and close the outlet 33.

The controller 90 is connected to the temperature detector 81, the outside air temperature detector 82, the throttle opening degree detector 83, the vehicle speed detector 84, and the catalyst temperature detector 86. The controller 90 obtains detection results of the temperature detector 81, the outside air temperature detector 82, the throttle opening degree detector 83, the vehicle speed detector 84, and the catalyst temperature detector 86. The controller 90 controls the opening and closing member 51 in accordance with these detection results. Accordingly, a balance is adjusted between cooling of the heat exchanger 21 and air resistance of the straddled vehicle 1 in accordance with the circumstances of the straddled vehicle 1.

For example, the controller 90 controls the opening and closing member 51 in accordance with the detection result of the temperature detector 81. The controller 90 switches the opening and closing member 51 between the opened state and the closed state in accordance with the detection result of the temperature detector 81.

For example, the controller 90 adjusts the opening degree of the opening and closing member 51 in accordance with at least one selected from the detection result of the outside air temperature by the outside air temperature detector 82, the detection result of the opening degree of the throttle by the throttle opening degree detector 83, and the detection result of the speed of the straddled vehicle 1 by the vehicle speed detector 84.

For example, the controller 90 adjusts the opening degree of the opening and closing member 51 in accordance with the detection result of the catalyst temperature detector 86.

The controller 90 includes, for example, a read-only memory (ROM), a processor, and a random-access memory (RAM). The ROM stores various types of programs. The programs stored in the ROM include, for example, an opening and closing control program for the opening and closing member 51. The processor performs arithmetic processing. The processor executes a program stored in the ROM. Thereby, the processor implements various functions. The processor is, for example, a central processing unit (CPU). The RAM stores various types of information temporarily. The RAM is used as a work area of the processor.

The controller 90 includes a calculating unit 91. The calculating unit 91 may include the processor described above. The calculating unit 91 loads a program stored in the ROM. The calculating unit 91 executes the program.

The controller 90 includes a memory unit 92. The memory unit 92 may include part of the ROM and the RAM described above. The memory unit 92 may include a component other than the ROM and the RAM described above. The memory unit 92 may be at least either a semiconductor memory or a hard disk.

The memory unit 92 stores a first threshold and a second threshold. The second threshold is smaller than the first threshold. The calculating unit 91 refers to the first threshold and the second threshold stored in the memory unit 92.

The controller 90 may be an electric control unit (ECU) provided in the straddled vehicle 1.

### 2. Operation of straddled vehicle 1

The following exemplarily describes control by the controller 90 and operation of the straddled vehicle 1. Detailed description is made to control examples 1 to 6.

### <Control example 1>

The controller 90 controls opening and closing of the opening and closing member 51 in accordance with the detection result of the temperature detector 81.

For example, if the temperature of the liquid in the heat exchanger 21 rises from a value lower than the first threshold to a value higher than the first threshold, the controller 90 switches the opening and closing member 51 from the closed state to the opened state. Specifically, if the temperature of the liquid in the heat exchanger 21 rises from a value lower than the first threshold to a value higher than the first threshold, the controller 90 switches the first left opening and closing member 52L and the first right opening and closing member 52R from the closed state to the opened state. The first threshold is, for example, 90 degrees Celsius.

If the temperature of the liquid in the heat exchanger 21 rises from a value lower than the first threshold to a value higher than the first threshold, the opening and closing member 51 is switched from the closed state to the opened state. When the opening and closing member 51 is switched from the closed state to the opened state, a volume of air passing through the heat exchanger 21 increases. As a result, the heat exchanger 21 easily cools the liquid. Accordingly, the temperature of the liquid in the heat exchanger 21 does not become excessively high.

For example, if the temperature of the liquid in the heat exchanger 21 lowers from a value higher than the second threshold to a value lower than the second threshold, the controller 90 switches the opening and closing member 51 from the opened state to the closed state. Specifically, if the temperature of the liquid in the heat exchanger 21 lowers from a value higher than the second threshold to a value lower than the second threshold, the controller 90 switches the first left opening and closing member 52L and the first right opening and closing member 52R from the opened state to the closed state. The second threshold is set to a temperature lower than the first threshold. The second threshold is, for example, 80 degrees Celsius.

If the temperature of the liquid in the heat exchanger 21 lowers from a value higher than the second threshold to a value lower than the second threshold, the opening and closing member 51 is switched from the opened state to the closed state. When the opening and closing member 51 is switched from the opened state to the closed state, a volume of air passing through the heat exchanger 21 significantly decreases. As a result, it is hard for the heat exchanger 21 to cool the liquid. Accordingly, the temperature of the liquid in the heat exchanger 21 does not become excessively low. Moreover, air resistance of the straddled vehicle 1 due to air passing through the heat exchanger 21 significantly decreases.

### <Control example 2>

When the opening and closing member 51 opens the outlet 33, the controller 90 adjusts the opening degree of the opening and closing member 51 in accordance with the detection result of the outside air temperature detector 82.

For example, when the opening and closing member 51 opens the outlet 33, the controller 90 increases the opening degree of the opening and closing member 51 as the outside air temperature is high. Specifically, the controller 90 increases the opening degree of the first left opening and closing member 52L and the first right opening and closing member 52R as the outside air temperature becomes high.

It becomes hard for the heat exchanger 21 to cool the liquid as the outside air temperature becomes high. The opening degree of the opening and closing member 51 increases as the outside air temperature becomes high. The volume of air passing through the heat exchanger 21 increases as the opening degree of the opening and closing member 51 becomes large. Consequently, the heat exchanger 21 cools the liquid suitably even when the outside air temperature is high. For example, the temperature of the liquid in the heat exchanger 21 is not excessively high even when the outside air temperature is high.

For example, when the opening and closing member 51 opens the outlet 33, the controller 90 decreases the opening degree of the opening and closing member 51 as the outside air temperature is low. Specifically, the controller 90 decreases the opening degree of the first left opening and closing member 52L and the first right opening and closing member 52R as the outside air temperature becomes low.

It becomes easy for the heat exchanger 21 to cool the liquid as the outside air temperature becomes low. The opening degree of the opening and closing member 51 decreases as the outside air temperature becomes low. The volume of air passing through the heat exchanger 21 decreases as the opening degree of the opening and closing member 51 becomes small. Consequently, the heat exchanger 21 cools the liquid suitably even when the outside air temperature is low. For example, the temperature of the liquid in the heat exchanger 21 is not excessively low even when the outside air temperature is low. Moreover, when the outside air temperature is low, air resistance of the straddled vehicle 1 due to air passing through the heat exchanger 21 decreases.

### <Control example 3>

When the opening and closing member 51 opens the outlet 33, the controller 90 adjusts the opening degree of the opening and closing member 51 in accordance with the detection result of the throttle opening degree detector 83.

For example, when the opening and closing member 51 opens the outlet 33, the controller 90 increases the opening degree of the opening and closing member 51 as the opening degree of the throttle is large. Specifically, the controller 90 increases the opening degree of the first left opening and closing member 52L and the first right opening and closing member 52R as the opening degree of the throttle becomes large.

The temperature of the liquid in the heat exchanger 21 easily rises as the opening degree of the throttle becomes large. The opening degree of the opening and closing member 51 increases as the opening degree of the throttle becomes large. That is, the volume of air passing through the heat exchanger 21 increases as the opening degree of the throttle becomes large. Consequently, even when the opening degree of the throttle is large, the heat exchanger 21 cools the liquid suitably. For example, the temperature of the liquid in the heat exchanger 21 is not excessively high even when the opening degree of the throttle is large.

For example, when the opening and closing member 51 opens the outlet 33, the controller 90 decreases the opening degree of the opening and closing member 51 as the opening degree of the throttle is small. Specifically, the controller 90 decreases the opening degree of the first left opening and closing member 52L and the first right opening and closing member 52R as the opening degree of the throttle becomes small.

The temperature of the liquid in the heat exchanger 21 is hard to rise as the opening degree of the throttle becomes small. The opening degree of the opening and closing member 51 decreases as the opening degree of the throttle becomes small. That is, the volume of air passing through the heat exchanger 21 decreases as the opening degree of the throttle becomes small. Consequently, even when the opening degree of the throttle is small, the heat exchanger 21 cools the liquid suitably. For example, the temperature of the liquid in the heat exchanger 21 is not excessively low even when the opening degree of the throttle is small. Moreover, when the opening degree of the throttle is small, air resistance of the straddled vehicle 1 due to air passing through the heat exchanger 21 decreases.

### <Control example 4>

When the opening and closing member 51 opens the outlet 33, the controller 90 adjusts the opening degree of the opening and closing member 51 in accordance with the detection result of the throttle opening degree detector 83. However, adjustment of the opening degree in the control example 4 is contrary to adjustment of the opening degree in the control example 3.

For example, when the opening and closing member 51 opens the outlet 33, the controller 90 decreases the opening degree of the opening and closing member 51 as the opening degree of the throttle is large. Specifically, the controller 90 decreases the opening degree of the first left opening and closing member 52L and the first right opening and closing member 52R as the opening degree of the throttle becomes large.

Rapid acceleration of the straddled vehicle 1 is required as the opening degree of the throttle is large. The opening degree of the opening and closing member 51 decreases as the opening degree of the throttle is large. That is, the volume of air passing through the heat exchanger 21 decreases as the opening degree of the throttle is large. Air resistance of the straddled vehicle 1 due to air passing through the heat exchanger 21 decreases as the opening degree of the throttle is large. Accordingly, acceleration performance of the straddled vehicle 1 is enhanced as the opening degree of the throttle is large.

### <Control example 5>

When the opening and closing member 51 opens the outlet 33, the controller 90 adjusts the opening degree of the opening and closing member 51 in accordance with the detection result of the vehicle speed detector 84.

For example, when the opening and closing member 51 opens the outlet 33, the controller 90 decreases the opening degree of the opening and closing member 51 as the speed of the straddled vehicle 1 is high. Specifically, the controller 90 decreases the opening degree of the first left opening and closing member 52L and the first right opening and closing member 52R as the speed of the straddled vehicle 1 is high.

The opening degree of the opening and closing member 51 decreases as the speed of the straddled vehicle 1 becomes high. Consequently, even when the speed of the straddled vehicle 1 is high, the volume of air passing through the heat exchanger 21 is suitably adjusted. For example, even when the speed of the straddled vehicle 1 is high, the volume of air passing through the heat exchanger 21 is not excessively large. Consequently, the heat exchanger 21 cools the liquid suitably even when the speed of the straddled vehicle 1 is high. Moreover, even when the speed of the straddled vehicle 1 is high, the air resistance of the straddled vehicle 1 due to air passing through the heat exchanger 21 is not excessively large.

For example, when the opening and closing member 51 opens the outlet 33, the controller 90 increases the opening degree of the opening and closing member 51 as the speed of the straddled vehicle 1 is low. Specifically, the controller 90 increases the opening degree of the first left opening and closing member 52L and the first right opening and closing member 52R as the speed of the straddled vehicle 1 is low.

The opening degree of the opening and closing member 51 increases as the speed of the straddled vehicle 1 becomes low. Consequently, even when the speed of the straddled vehicle is low, the volume of air passing through the heat exchanger 21 is suitably adjusted. For example, even when the speed of the straddled vehicle 1 is low, the volume of air passing through the heat exchanger 21 is not excessively small. Consequently, the heat exchanger 21 cools the liquid suitably even when the speed of the straddled vehicle 1 is low.

### <Control example 6>

When the opening and closing member 51 opens the outlet 33, the controller 90 controls the opening and closing member 51 in accordance with the detection result of the catalyst temperature detector 86.

For example, when the opening and closing member 51 opens the outlet 33, the controller 90 increases the opening degree of the opening and closing member 51 as the temperature of the catalytic device 8 is high. Specifically, the controller 90 increases the opening degree of the first left opening and closing member 52L and the first right opening and closing member 52R as the temperature of the catalytic device 8 is high.

The opening degree of the opening and closing member 51 increases as the temperature of the catalytic device 8 is high. Accordingly, air flow around the catalytic device 8 increases as the temperature of the catalytic device 8 is high. This avoids excessively high temperature of the catalytic device 8. Consequently, the catalytic device 8 suitably exhibits a function of purifying exhaust gas.

For example, when the opening and closing member 51 opens the outlet 33, the controller 90 decreases the opening degree of the opening and closing member 51 as the temperature of the catalytic device 8 is low. Specifically, the controller 90 decreases the opening degree of the first left opening and closing member 52L and the first right opening and closing member 52R as the temperature of the catalytic device 8 is low.

The opening degree of the opening and closing member 51 decreases as the temperature of the catalytic device 8 becomes low. Accordingly, air flow around the catalytic device 8 decreases as the temperature of the catalytic device 8 becomes low. This avoids excessively low temperature of the catalytic device 8. Consequently, the catalytic device 8 suitably exhibits a function of purifying exhaust gas.

### 3. Effect of the embodiment

The straddled vehicle 1 includes the power unit 7, the heat exchanger 21, the cowl 31, the opening and closing member 51, the temperature detector 81, and the controller 90. The heat exchanger 21 is located more forward than the power unit 7. The cowl 31 overlaps the heat exchanger 21 in side view of the vehicle. The cowl 31 has the inlet 32 and the outlet 33. The inlet 32 is located more forward than the heat exchanger 21. The outlet 33 is located more rearward than the heat exchanger 21. The opening and closing member 51 is capable of opening and closing the outlet 33. The temperature detector 81 detects a temperature of a liquid flowing within the heat exchanger 21. The controller 90 controls the opening and closing member 51 in accordance with the detection result of the temperature detector 81. Accordingly, the controller 90 easily controls the opening and closing member 51 suitably.

The opening and closing member 51 adjusts a volume of air passing through the heat exchanger 21.

For example, when the opening and closing member 51 opens the outlet 33, air within the cowl 31 is released through the outlet 33. Accordingly, when the opening and closing member 51 opens the outlet 33, air easily enters the cowl 31 through the inlet 32. When the opening and closing member 51 opens the outlet 33, air easily flows within the cowl 31. When the opening and closing member 51 opens the outlet 33, air easily passes through the heat exchanger 21. Consequently, when the opening and closing member 51 opens the outlet 33, a large volume of air passes through the heat exchanger 21. Consequently, when the opening and closing member 51 opens the outlet 33, the heat exchanger 21 cools the liquid suitably.

For example, when the opening and closing member 51 closes the outlet 33, air within the cowl 31 is not released through the outlet 33. Accordingly, when the opening and closing member 51 closes the outlet 33, air hardly enters the cowl 31 through the inlet 32. When the opening and closing member 51 closes the outlet 33, air hardly flows within the cowl 31. When the opening and closing member 51 closes the outlet 33, air hardly passes through the heat exchanger 21. Consequently, when the opening and closing member 51 closes the outlet 33, it is easy to satisfactorily reduce a volume of air passing through the heat exchanger 21. Consequently, when the opening and closing member 51 closes the outlet 33, it is easy to reduce air resistance suitably in the straddled vehicle 1.

As described above, the outlet 33 is located more rearward than the heat exchanger 21. As a result, it is easy to locate the heat exchanger 21 near the inlet 32. Accordingly, an enhanced cooling efficiency of the heat exchanger 21 is obtainable easily.

In summary, the straddled vehicle 1 allows suitable reduction in air resistance of the straddled vehicle 1. Moreover, the straddled vehicle 1 allows an enhanced cooling efficiency of the heat exchanger 21.

As described above, the outlet 33 is located more rearward than the heat exchanger 21. In other words, the outlet 33 is not positioned at a front part of the cowl 31. Accordingly, the front part of the cowl 31 has a relatively small size. For example, a length of the cowl 31 in the transverse direction Y is relatively small. For example, a length of the cowl 31 in the transverse direction Y between the front edge of the left cover 41L and the front edge of the right cover 41R is relatively small. Accordingly, air resistance of the cowl 31 is relatively small. Consequently, air resistance to the straddled vehicle 1 becomes much less.

As described above, the outlet 33 is located more rearward than the heat exchanger 21. Accordingly, no installation space is required for the outlet 33 and the opening and closing member 51 more forward than the heat exchanger 21. As a result, it is easy to locate the heat exchanger 21 near the inlet 32. This results in enhanced cooling efficiency of the heat exchanger 21.

The opening and closing member 51 is located more rearward than the heat exchanger 21. As a result, it is easier to locate the heat exchanger 21 near the inlet 32. Accordingly, an enhanced cooling efficiency of the heat exchanger 21 is obtainable more easily.

The inlet 32 is located rightward of the left cover 41L and leftward of the right cover 41R. Consequently, it is easy to provide the inlet 32 in the cowl 31.

The outlet 33 has the first left outlet 34L and the first right outlet 34R. The first left outlet 34L passes through the left cover 41L. The first right outlet 34R passes through the right cover 41R. Consequently, it is easy to provide the outlet 33 in the cowl 31.

The opening and closing member 51 includes the first left opening and closing member 52L and the first right opening and closing member 52R. The first left opening and closing member 52L opens and closes the first left outlet 34L. The first right opening and closing member 52R opens and closes the first right outlet 34R. Consequently, it is easy that the opening and closing member 51 opens and closes the outlet 33.

The left cover 41L includes the first left recess 42L concave rightward. The first left outlet 34L is located in the first left recess 42L. Accordingly, the first left outlet 34L is located at an appropriate position. The right cover 41R includes the first right recess 42R concave leftward. The first right outlet 34R is located in the first right recess 42R. Accordingly, the first right outlet 34R is located at an appropriate position.

The first left outlet 34L is located at a front part of the first left recess 42L. The first left outlet 34L extends in the transverse direction Y. Accordingly, when the first left opening and closing member 52L opens the first left outlet 34L, air within the cowl 31 is efficiently released through the first left outlet 34L to the outside of the cowl 31.

The first left recess 42L includes the first left guide wall 43L. The first left guide wall 43L extends rearward and leftward from the right end 34La of the first left outlet 34L. Accordingly, the first left guide wall 43L guides air rearward and leftward from the first left outlet 34L. Consequently, after air is released from the first left outlet 34L, air is hard to contact the straddled vehicle 1 again. Consequently, a rear part of the straddled vehicle 1 is hard to be heated with the air released from the first left outlet 34L.

The first right outlet 34R is located at a front part of the first right recess 42R. The first right outlet 34R extends in the transverse direction Y. Accordingly, when the first right opening and closing member 52R opens the first right outlet 34R, air within the cowl 31 is efficiently released through the first right outlet 34R to the outside of the cowl 31.

The first right recess 42R includes the first right guide wall 43R. The first right guide wall 43R extends rearward and rightward from the left end 34Ra of the first right outlet 34R. Accordingly, the first right guide wall 43R guides air rearward and rightward from the first right outlet 34R. Consequently, after air is released from the first right outlet 34R, air is hard to contact the straddled vehicle 1 again. Consequently, a rear part of the straddled vehicle 1 is hard to be heated with the air released from the first right outlet 34R.

The right end 34La of the first left outlet 34L is located more rightward than the left end 21a of the heat exchanger 21. Accordingly, when the first left opening and closing member 52L opens the first left outlet 34L, air having passed through the heat exchanger 21 is efficiently released through the first left outlet 34L to the outside of the cowl 31.

The left end 34Ra of the first right outlet 34R is located more leftward than the right end 21b of the heat exchanger 21. Accordingly, when the first right opening and closing member 52R opens the first right outlet 34R, air having passed through the heat exchanger 21 is efficiently released through the first right outlet 34R to the outside of the cowl 31.

The cowl 31 includes the lower cover 49 located lower than the heat exchanger 21. The lower cover 49 connects the right cover 41R and the left cover 41L. The lower cover 49 prevents release of air within the cowl 31 to the below of the cowl 31. Accordingly, a small volume of air is released from the cowl 31 through a region except for the outlet 33 to the outside of the cowl 31. Consequently, the opening and closing member 51 effectively adjusts a volume of air passing through the heat exchanger 21. For example, when the opening and closing member 51 opens the outlet 33, a volume of air passing through the heat exchanger 21 increases effectively. For example, when the opening and closing member 51 closes the outlet 33, a volume of air passing through the heat exchanger 21 decreases effectively.

The opening and closing member 51 is located more forward than the power unit 7. The opening and closing member 51 does not interfere with the power unit 7.

The cowl 31 overlaps the power unit 7 in side view of the vehicle. As described above, the power unit 7 is located more rearward than the heat exchanger 21. The power unit 7 prevents release of air within the cowl 31 toward rearward of the cowl 31. Accordingly, a much less volume of air is released from the cowl 31 through a region except for the outlet 33 to the outside of the cowl 31. Consequently, the opening and closing member 51 can adjust a volume of air passing through the heat exchanger 21 more effectively.

The cowl 31 extends from a position higher than the heat exchanger 21 to a position lower than the power unit 7. Accordingly, the cowl 31 is made large. Consequently, when the opening and closing member 51 opens the outlet 33, a large volume of air passes through the heat exchanger 21.

The heat exchanger 21 includes the radiator. Accordingly, the opening and closing member 51 adjusts a volume of air passing through the radiator.

The straddled vehicle 1 includes the catalytic device 8. The catalytic device 8 overlaps the cowl 31 in side view of the vehicle. Consequently, it is easy that the opening and closing member 51 adjusts air flow around the catalytic device 8. For example, air flow around the catalytic device 8 when the opening and closing member 51 opens the outlet 33 is larger than air flow around the catalytic device 8 when the opening and closing member 51 closes the outlet 33.

The control example 1 produces the following effects. That is, if the temperature of the liquid rises from a value lower than the first threshold to a value higher than the first threshold, the opening and closing member 51 is switched from the closed state to the opened state. Here, when the opening and closing member 51 is under the opened state, the opening and closing member 51 opens the outlet 33. When the opening and closing member 51 is under the closed state, the opening and closing member 51 closes the outlet 33. Consequently, the heat exchanger 21 cools the liquid suitably. If the temperature of the liquid lowers from a value higher than the second threshold to a value lower than the second threshold, the opening and closing member 51 is changed from the opened state to the closed state. This suitably reduces air resistance of the straddled vehicle 1. As described above, the controller 90 controls the opening and closing member 51 suitably.

The controller 90 adjusts the opening degree of the opening and closing member 51. Here, the opening degree of the opening and closing member 51 is one factor for the volume of air passing through the heat exchanger 21. Accordingly, the controller 90 adjusts the volume of air passing through the heat exchanger 21 when the opening and closing member 51 opens the outlet 33.

The controller 90 adjusts the opening degree of the opening and closing member 51 in accordance with at least one selected from the detection result of the outside air temperature, the detection result of the opening degree of the throttle, and the detection result of the speed of the straddled vehicle 1. Here, the detection result of the outside air temperature is one factor for the temperature of air passing through the heat exchanger 21. The detection result of the opening degree of the throttle is one factor for the temperature of the liquid in the heat exchanger 21. Here, the speed of the straddled vehicle 1 is one factor for the volume of air passing through the heat exchanger 21. Accordingly, the controller 90 suitably adjusts the volume of air passing through the heat exchanger 21 when the opening and closing member 51 opens the outlet 33.

The straddled vehicle 1 includes at least one selected from the outside air temperature detector 82, the throttle opening degree detector 83, and the vehicle speed detector 84. Accordingly, it is easy that the controller 90 adjusts the opening degree of the opening and closing member 51 in accordance with at least one selected from the detection result of the outside air temperature, the detection result of the opening degree of the throttle, and the detection result of the speed of the straddled vehicle 1.

The control example 2 produces the following effects. That is, when the opening and closing member 51 opens the outlet 33, the controller 90 increases the opening degree of the opening and closing member 51 as the outside air temperature is high. When the opening and closing member 51 opens the outlet 33, the controller 90 decreases the opening degree of the opening and closing member 51 as the outside air temperature is low. For example, if the outside air temperature is relatively high, the temperature of air passing through the heat exchanger 21 is high and the volume of air passing through the heat exchanger 21 is large. Consequently, if the outside air temperature is relatively high, the heat exchanger 21 cools the liquid suitably. For example, if the outside air temperature is relatively low, the temperature of air passing through the heat exchanger 21 is low and the volume of air passing through the heat exchanger 21 is small. Consequently, if the outside air temperature is relatively low, the heat exchanger 21 cools the liquid suitably. As a result, the heat exchanger 21 cools the liquid suitably regardless of the outside air temperature. As described above, the controller 90 adjusts the opening degree of the opening and closing member 51 suitably.

The control example 3 produces the following effects. That is, when the opening and closing member 51 opens the outlet 33, the controller 90 increases the opening degree of the opening and closing member 51 as the opening degree of the throttle is large. When the opening and closing member 51 opens the outlet 33, the controller 90 decreases the opening degree of the opening and closing member 51 as the opening degree of the throttle is small. For example, if the opening degree of the throttle is relatively large, the temperature of the liquid in the heat exchanger 21 is high and the volume of air passing through the heat exchanger 21 is large. Consequently, if the opening degree of the throttle is relatively large, the heat exchanger 21 cools the liquid suitably. For example, if the opening degree of the throttle is relatively small, the temperature of the liquid in the heat exchanger 21 is low and the volume of air passing through the heat exchanger 21 is small. Consequently, if the opening degree of the throttle is relatively small, the heat exchanger 21 cools the liquid suitably. As a result, the heat exchanger 21 cools the liquid suitably regardless of the opening degree of the throttle. As described above, the controller 90 adjusts the opening degree of the opening and closing member 51 suitably.

The control example 4 produces the following effects. That is, when the opening and closing member 51 opens the outlet 33, the controller 90 decreases the opening degree of the opening and closing member 51 as the opening degree of the throttle is large. For example, if the opening degree of the throttle is relatively large, the temperature of the liquid in the heat exchanger 21 is high and the volume of air passing through the heat exchanger 21 is small. Consequently, if the opening degree of the throttle is relatively large, reduction in air resistance of the straddled vehicle 1 is given priority over cooling of the liquid by the heat exchanger 21. In other words, if the opening degree of the throttle is relatively large, acceleration of the straddled vehicle 1 is given priority over cooling of the liquid by the heat exchanger 21. As described above, the controller 90 adjusts the opening degree of the opening and closing member 51 suitably.

The control example 5 produces the following effects. That is, when the opening and closing member 51 opens the outlet 33, the controller 90 decreases the opening degree of the opening and closing member 51 as the speed of the straddled vehicle 1 is high. When the opening and closing member 51 opens the outlet 33, the controller 90 increases the opening degree of the opening and closing member 51 as the speed of the straddled vehicle 1 is low. For example, if the speed of the straddled vehicle 1 is relatively high, the volume of air passing through the heat exchanger 21 is not excessively large. Consequently, if the speed of the straddled vehicle 1 is relatively high, the heat exchanger 21 cools the liquid suitably. For example, if the speed of the straddled vehicle 1 is relatively low, the volume of air passing through the heat exchanger 21 is not excessively small. Consequently, if the speed of the straddled vehicle 1 is relatively low, the heat exchanger 21 cools the liquid suitably. As a result, the heat exchanger 21 cools the liquid suitably regardless of the speed of the straddled vehicle 1. As described above, the controller 90 adjusts the opening degree of the opening and closing member 51 suitably.

The control example 6 produces the following effects. That is, when the opening and closing member 51 opens the outlet 33, the controller 90 increases the opening degree of the opening and closing member 51 as the temperature of the catalytic device 8 is high. When the opening and closing member 51 opens the outlet 33, the controller 90 decreases the opening degree of the opening and closing member 51 as the temperature of the catalytic device 8 is low. For example, if the temperature of the catalytic device 8 is relatively high, a volume of air flowing around the catalytic device 8 is not excessively small. This avoids excessively high temperature of the catalytic device 8 when the temperature of the catalytic device 8 is relatively high. For example, if the temperature of the catalytic device 8 is relatively low, a volume of air flowing around the catalytic device 8 is not excessively large. This avoids excessively low temperature of the catalytic device 8 when the temperature of the catalytic device 8 is relatively low. As a result, the temperature of the catalytic device 8 is suitably adjusted. Consequently, the catalytic device 8 always exhibits a function of purifying exhaust gas suitably. As described above, the controller 90 adjusts the opening degree of the opening and closing member 51 suitably.

### 4. Modifications

The present invention is not limited to the foregoing embodiment, but may be modified as follows.
(1) In the foregoing embodiment, the straddled vehicle 1 includes one heat exchanger 21. In other words, the number of heat exchangers 21 provided in the straddled vehicle 1 is one. However, the number of heat exchangers 21 is not limited to this. The straddled vehicle 1 may include a plurality of heat exchangers 21. In other words, the number of heat exchangers 21 provided in the straddled vehicle 1 may be two or more.

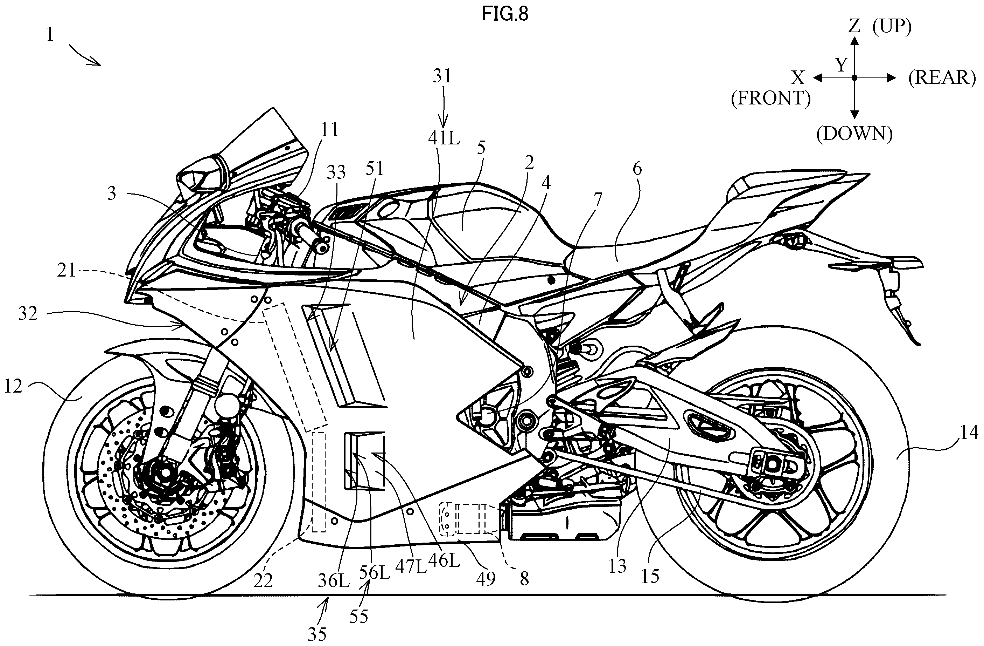

Fig. 8 is a left side view of a straddled vehicle 1 according to one modification. Like numerals are used to identify like components which are the same as those in the first embodiment, and the components will not particularly be described.

In this modification, the straddled vehicle 1 includes a plurality of heat exchangers 21, 22. The heat exchanger 21 is called a "first heat exchanger 21" for convenience. The heat exchanger 22 is called a "second heat exchanger 22". The first heat exchanger 21 is a radiator, for example. A liquid flowing in the first heat exchanger 21 is cooling water, for example. The first heat exchanger 21 cools the cooling water. The second heat exchanger 22 is an oil cooler, for example. A liquid flowing in the second heat exchanger 22 is an engine oil, for example. The engine oil is, for example, a lubricating oil for a power unit 7. The second heat exchanger 22 cools the engine oil. The second heat exchanger 22 is located lower than the first heat exchanger 21.

The straddled vehicle 1 includes a plurality of outlets 33, 35. The outlets 33, 35 are provided at the heat exchangers 21, 22, respectively. The outlet 33 is called a "first outlet 33" for convenience. The outlet 35 is called a "second outlet 35". Specifically, the first outlet 33 is provided for the first heat exchanger 21. The first outlet 33 exhausts air having passed through the first heat exchanger 21. The second outlet 35 is provided for the second heat exchanger 22. The second outlet 35 exhausts air having passed through the second heat exchanger 22.

The second outlet 35 is located more rearward than the second heat exchanger 22. The entire of the second outlet 35 is located more rearward than the entire of the second heat exchanger 22. The second outlet 35 has no portion positioned more forward than the second heat exchanger 22. Accordingly, the second outlet 35 does not overlap the second heat exchanger 22 in side view of the vehicle. Air having passed through the second heat exchanger 22 is released from the second outlet 35 to the outside of the cowl 31.

The second outlet 35 is located more forward than the power unit 7. The second outlet 35 is located more forward than the catalytic device 8.

The second outlet 35 includes a second left outlet 36L. The second left outlet 36L is provided on the left cover 41L. The second left outlet 36L passes through the left cover 41L.

The left cover 41L has a second left recess 46L. The second left recess 46L is concave rightward. The second left recess 46L is located more rearward than the second heat exchanger 22.

The second left outlet 36L is located in the second left recess 46L. The second left outlet 36L is located at a front part of the second left recess 46L. The second left outlet 36L extends in the transverse direction Y.

The second left recess 46L includes a second left guide wall 47L. The second left guide wall 47L extends rearward and leftward from a right end of the second left outlet 36L. The second left guide wall 47L guides air rearward and leftward from the second left outlet 36L.

The straddled vehicle 1 includes a plurality of opening and closing members 51, 55. The opening and closing member 51 is called a "first opening and closing member 51" for convenience. The opening and closing member 55 is called a "second opening and closing member 55". The opening and closing members 51, 55 are provided on the first outlet 33 and the second outlet 35, respectively. Specifically, the first opening and closing member 51 is provided at the first outlet 33. The first opening and closing member 51 is capable of opening and closing the first outlet 33. The second opening and closing member 55 is provided at the second outlet 35. The second opening and closing member 55 is capable of opening and closing the second outlet 35.

The second opening and closing member 55 is located more rearward than the second heat exchanger 22. The entire of the second opening and closing member 55 is located more rearward than the second heat exchanger 22. The second opening and closing member 55 has no portion positioned more forward than the second heat exchanger 22. Accordingly, the second opening and closing member 55 does not overlap the second heat exchanger 22 in side view of the vehicle.

The second opening and closing member 55 includes a second left opening and closing member 56L. The second left opening and closing member 56L is capable of opening and closing the second left outlet 36L. The second left opening and closing member 56L is provided on the second left outlet 36L.

The second outlet 35 includes a second right outlet not shown. The second right outlet is formed in the right cover 41R. The second right outlet is formed symmetrically to the second left outlet 36L.

The second opening and closing member 55 includes a second right opening and closing member not shown. The second right opening and closing member is capable of opening and closing the second right outlet. The second right opening and closing member is formed symmetrically to the second left opening and closing member 56L.

As described above, also with this modification, suitable reduction in air resistance of the straddled vehicle 1 and an enhanced cooling efficiency of the heat exchangers 21, 22 can be achieved.

The outlets 33, 35 are provided at the heat exchangers 21, 22, respectively. The opening and closing members 51, 55 are provided at the outlets 33, 35, respectively. Consequently, it is easy to adjust the volume of air passing through the heat exchangers 21, 22 individually. As a result, it is easy to cool the liquid in the heat exchangers 21, 22 individually.

In this modification, a temperature detector 81 may detect a temperature of a liquid in the first heat exchanger 21 and a temperature of a liquid in the second heat exchanger 22. In this modification, a controller 90 may control the opening and closing member 51 in accordance with the temperature of the liquid in the first heat exchanger 21 detected by the temperature detector 81. The controller 90 may control the opening and closing member 55 in accordance with the temperature of the liquid in the second heat exchanger 22 detected by the temperature detector 81.

The following describes a control example that the controller 90 controls the opening and closing member 55. The liquid in the second heat exchanger 22 is called an "engine oil" for convenience.

For example, if the temperature of the engine oil rises from a value lower than a first threshold to a value higher than the first threshold, the controller 90 switches the second opening and closing member 55 from a closed state to an opened state. Specifically, if the temperature of the engine oil rises from a value lower than the first threshold to a value higher than the first threshold, the controller 90 switches the second left opening and closing member 56L and the second right opening and closing member from the closed state to the opened state. Here, the first threshold is for the engine oil. The first threshold for the engine oil is, for example, 120 degrees Celsius.

If the temperature of the engine oil rises from a value lower than the first threshold to a value higher than the first threshold, the second opening and closing member 55 is switched from the closed state to the opened state. When the second opening and closing member 55 is switched from the closed state to the opened state, a volume of air passing through the heat exchanger 22 increases. Accordingly, the temperature of the engine oil does not become excessively high.

For example, if the temperature of the engine oil lowers from a value higher than a second threshold to a value lower than the second threshold, the controller 90 switches the second opening and closing member 55 from the opened state to the closed state. Specifically, if the temperature of the engine oil lowers from a value higher than the second threshold to a value lower than the second threshold, the controller 90 switches the second left opening and closing member 56L and the second right opening and closing member from the opened state to the closed state. Here, the second threshold is for the engine oil. The second threshold for the engine oil is smaller than the first threshold for the engine oil. The second threshold for the engine oil is, for example, 100 degrees Celsius.

If the temperature of the engine oil lowers from a value higher than the second threshold to a value lower than the second threshold, the opening and closing member 55 is changed from the opened state to the closed state. When the opening and closing member 55 is switched from the opened state to the closed state, a volume of air passing through the heat exchanger 22 significantly decreases. Accordingly, the temperature of the engine oil does not become excessively low. Moreover, air resistance of the straddled vehicle 1 due to air passing through the heat exchanger 22 significantly decreases.

(2) In the embodiment described above, the heat exchanger 21 includes the radiator. However, the construction of the heat exchanger 21 is not limited to this. For example, the heat exchanger 21 may include at least either the radiator or an oil cooler. If the heat exchanger 21 includes the radiator, the opening and closing member 51 adjusts a volume of air passing through the radiator. If the heat exchanger 21 includes the oil cooler, the opening and closing member 51 adjusts a volume of air passing through the oil cooler.

(3) In the embodiment described above, the liquid in the heat exchanger 21 is cooling water. However, the liquid in the heat exchanger 21 is not limited to this. For example, the liquid flowing in the heat exchanger 21 may be at least either cooling water or an engine oil. If the liquid in the heat exchanger 21 is cooling water, the heat exchanger 21 cools the cooling water. If the liquid in the heat exchanger 21 is an engine oil, the heat exchanger 21 cools the engine oil.

(4) In the embodiment described above, part of the catalytic device 8 does not overlap the cowl 31 in side view of the vehicle. That is, at least part of the catalytic device 8 is not located within the cowl 31. However, arrangement of the catalytic device 8 is not limited to this. For example, as shown in Fig. 8, the catalytic device 8 may entirely overlap the cowl 31 in side view of the vehicle. For example, the entire of the catalytic device 8 may be located within the cowl 31. In this modification, the controller 90 adjusts the opening and closing member 51, thereby adjusting a volume of air flowing around the catalytic device 8 more suitably. Accordingly, the controller 90 can control the temperature of the catalytic device 8 more suitably. For example, when the controller 90 causes the opening and closing member 51 to close the outlet 33, the temperature of the catalytic device 8 rapidly rises. For example, when the controller 90 causes the opening and closing member 51 to open the outlet 33, the temperature of the catalytic device 8 rapidly lowers. Consequently, it is much easier that the catalytic device 8 exhibits a function of purifying exhaust gas.

(5) In the embodiment described above, the straddled vehicle 1 includes the engine (internal combustion engine) as the power unit 7. However, the invention is not limited to this. For example, the straddled vehicle 1 may have an electric motor as the power unit 7 in addition to the engine. For example, the straddled vehicle 1 may have an electric motor as the power unit 7 instead of the engine.

(6) In the embodiment described above, the entire of the opening and closing member 51 is located more rearward than the entire of the heat exchanger 21. However, arrangement of the opening and closing member 51 is not limited to this. For example, the opening and closing member 51 may have a portion positioned rightward or leftward of the heat exchanger 21. For example, the opening and closing member 51 may have a portion positioned more forward than a rear end of the heat exchanger 21. For example, the opening and closing member 51 may overlap the heat exchanger 21 in side view of the vehicle.

(7) In the embodiment described above, the opening and closing member 51 is rotatable relative to the cowl 31. However, the construction of the opening and closing member 51 is not limited to this. For example, the opening and closing member 51 may be slidable relative to the cowl 31. For example, the opening and closing member 51 is movable between a first position and a second position. When the opening and closing member 51 is at the first position, the opening and closing member 51 closes the outlet 33. The first position is at the outlet 33. When the opening and closing member 51 is at the second position, the opening and closing member 51 opens the outlet 33. The second position is, for example, a position more forward than the outlet 33. The second position is, for example, lateral of the heat exchanger 21. The second position is, for example, at a space between the heat exchanger 21 and the cowl 31. In this modification, the space between the heat exchanger 21 and the cowl 31 is usable effectively.

(8) In the embodiment described above, the first left opening and closing member 52L includes two plates 53La, 53Lb. However, the construction of the first left opening and closing member 52L is not limited to this. For example, the first left opening and closing member 52L may be formed by only the single plate 53La.

In the embodiments described above, the first right opening and closing member 52R includes two plates 53Ra, 53Rb. However, the construction of the first right opening and closing member 52R is not limited to this. For example, the first right opening and closing member 52R may be formed by only the single plate 53Ra.

(9) In the embodiment described above, the straddled vehicle 1 includes the outside air temperature detector 82, the throttle opening degree detector 83, and the vehicle speed detector 84. However, the construction of the straddled vehicle 1 is not limited to this. For example, the straddled vehicle 1 may include at least one selected from the outside air temperature detector 82, the throttle opening degree detector 83, and the vehicle speed detector 84.

(10) The foregoing embodiment and each of the modifications described in paragraphs (1) to (9) above may be further varied as appropriate by replacing or combining their constructions with the constructions of the other modifications.

### Reference Signs List

1: straddled vehicle
2: vehicle body frame
7: power unit
8: catalytic device
21: heat exchanger (first heat exchanger)
21a: left end
21b: right end
22: heat exchanger (second heat exchanger)
23: duct
24: flow path
31: cowl
32: inlet
33: outlet (first outlet)
34L: first left outlet
34La: right end
34R: first right outlet
34Ra: left end
35: outlet (second outlet)
36L: second left outlet
41L: left cover
41R: right cover
42L: first left recess
42R: first right recess
43L: first left guide wall
43R: first right guide wall
46L: second left recess
47L: second left guide wall
48: front cover
49: lower cover
51: opening and closing member (first opening and closing member)
52L: first left opening and closing member
52R: first right opening and closing member
53La: plate
53Lb: plate
53Ra: plate
53Rb: plate
55: opening and closing member (second opening and closing member)
56L: second left opening and closing member
61: driving unit
62L: first left driving unit
63: motor
64: transmission mechanism
81: temperature detector
82: outside air temperature detector
83: throttle opening degree detector
84: vehicle speed detector
86: catalyst temperature detector
90: controller

## Claims

1. A straddled vehicle (1), comprising:
a power unit (7);
a heat exchanger (21) located more forward than the power unit (7);
a cowl (31) configured to overlap the heat exchanger (21) in side view of the straddled vehicle (1), and having an inlet (32) located more forward than the heat exchanger (21) and an outlet (33) located more rearward than the heat exchanger (21);
an opening and closing member (51) capable of opening and closing the outlet (33);
a temperature detector (81) configured to detect a temperature of a liquid flowing within the heat exchanger (21); and
a controller (90) configured to control the opening and closing member (51) in accordance with a detection result of the temperature detector (81).

2. The straddled vehicle (1) according to claim 1, wherein
the opening and closing member (51) is located more rearward than the heat exchanger (21).

3. The straddled vehicle (1) according to claim 1, wherein
the cowl (31) includes:
a left cover (41L) located leftward of the heat exchanger (21) and extending in a front-back direction of the straddled vehicle (1); and
a right cover (41R) located rightward of the heat exchanger (21) and extending in the front-back direction of the straddled vehicle (1),
the inlet (32) is located rightward of the left cover (41L) and leftward of the right cover (41R),
the outlet (33) includes:
a first left outlet (34L) passing through the left cover (41L); and
a first right outlet (34R) passing through the right cover (41R), and the opening and closing member (51) includes:
a first left opening and closing member (52L) configured to open and close the first left outlet (34L); and
a first right opening and closing member (52R) configured to open and close the first right outlet (34R).

4. The straddled vehicle (1) according to claim 3, wherein
the left cover (41L) has a first left recess (42L) concave rightward,
the first left outlet (34L) being located in the first left recess (42L), and
the right cover (41R) has a first right recess (42R) concave leftward,
the first right outlet (34R) being located in the first right recess (42R).

5. The straddled vehicle (1) according to claim 4, wherein
the first left outlet (34L) is located at a front part of the first left recess (42L) and extends in a transverse direction of the straddled vehicle (1),
the first left recess (42L) having a first left guide wall (43L) extending rearward and leftward from a right end (34La) of the first left outlet (34L), and
the first right outlet (34R) is located at a front part of the first right recess (42R) and extends in the transverse direction of the straddled vehicle (1),
the first right recess (42R) having a first right guide wall extending rearward and rightward from a left end (34Ra) of the first right outlet (34R).

6. The straddled vehicle (1) according to claim 5, wherein
the right end (34La) of the first left outlet (34L) is positioned more rightward than a left end (21a) of the heat exchanger (21), and
the left end (34Ra) of the first right outlet (34R) is positioned more leftward than a right end (21b) of the heat exchanger (21).

7. The straddled vehicle (1) according to claim 3, wherein
the cowl (31) includes a lower cover (49) located lower than the heat exchanger (21),
the lower cover (49) connecting the left cover (41L) and the right cover (41R).

8. The straddled vehicle (1) according to claim 1, wherein
the opening and closing member (51) is located more forward than the power unit (7).

9. The straddled vehicle (1) according to claim 1, wherein
the cowl (31) overlaps the power unit (7) in side view of the straddled vehicle (1).

10. The straddled vehicle (1) according to claim 1, wherein
the cowl (31) extends from a position higher than the heat exchanger (21) to a position lower than the power unit (7).

11. The straddled vehicle (1) according to claim 1, wherein
the heat exchanger (21) contains at least either a radiator or an oil cooler.

12. The straddled vehicle (1) according to claim 1, further comprising:
a catalytic device (8) configured to overlap the cowl (31) in side view of the straddled vehicle (1).

13. The straddled vehicle (1) according to claim 1, wherein
the controller (90) switches the opening and closing member (51) from a closed state to an opened state if a temperature of the liquid rises from a value lower than a first threshold to a value higher than the first threshold, and
the controller (90) switches the opening and closing member (51) from the opened state to the closed state if a temperature of the liquid lowers from a value higher than a second threshold to a value lower than the second threshold,
the second threshold being lower than the first threshold.

14. The straddled vehicle (1) according to claim 1, comprising at least one selected from an outside air temperature detector (82) configured to detect an outside air temperature, a throttle opening degree detector (83) configured to detect an opening degree of a throttle, and a vehicle speed detector (84) configured to detect a speed of the straddled vehicle (1), wherein
the controller (90) adjusts an opening degree of the opening and closing member (51) in accordance with at least one selected from a detection result of the outside air temperature by the outside air temperature detector (82), a detection result of the opening degree of the throttle by the throttle opening degree detector (83), and a detection result of the speed of the straddled vehicle (1) by the vehicle speed detector (84).

15. The straddled vehicle (1) according to claim 1, further comprising:
a plurality of heat exchangers (21,22),
the heat exchangers (21,22) having the outlets (33,35) individually, wherein
the opening and closing members (51,55) are provided at the outlets (33,35) individually.
